# EUROPEAN PATENT APPLICATION

(11) **EP 4 840 924 A1**
(43) Date of publication of application: **18.11.2026**
(21) Application number: 25757674.4
(22) Date of filing: 17.02.2025
(51) Int. Cl.: C09K 19/18, G02F 1/1333

(54) **LIQUID CRYSTAL COMPOSITION AND USE THEREOF**

(30) Priority: 19.02.2024 CN 202410186069
(71) Applicant: Huawei Technologies Co., Ltd., Shenzhen, Guangdong 518129 (CN)
(72) Inventor: CHEN, Quan, Shenzhen, Guangdong 518129 (CN); SI, Xiaojia, Shenzhen, Guangdong 518129 (CN)
(74) Representative: Gill Jennings & Every LLP
(86) International application number: PCT/CN2025/077527
(87) International publication number: WO 2025/176080

(57) **Abstract**

Embodiments of this application provide a liquid crystal composition and use thereof. The liquid crystal composition includes an additive and three types of compounds with specific structures. The liquid crystal composition exhibits high birefringence, a suitable clearing point, resistance to crystallization at low temperatures, good high-temperature stability, and good ultraviolet stability, and is suitable for use in liquid crystal devices.

## Description

This application claims priority to Chinese Patent Application No. 202410186069.1, filed with the China National Intellectual Property Administration on February 19, 2024 and entitled "LIQUID CRYSTAL COMPOSITION AND USE THEREOF", which is incorporated herein by reference in its entirety.

### TECHNICAL FIELD

This application relates to the field of liquid crystal material technologies, and in particular, to a liquid crystal composition and use thereof.

### BACKGROUND

Liquid crystal materials have been widely used in tablet computers, televisions, and other products in the display field. With development of science and technology, the liquid crystal materials may be further used in fields such as optical communications and microwave antennas. However, in the fields such as optical communications and microwave antennas, higher performance requirements are imposed on the liquid crystal materials. In particular, the liquid crystal materials are required to have high birefringence, a suitable clearing point, and the like. In addition, the liquid crystal materials are required to have good stability. For example, a voltage holding ratio of a liquid crystal device made from liquid crystal materials does not decrease significantly after the liquid crystal device is exposed to ultraviolet radiation or placed in a high-temperature environment for a period of time. However, at present, neither single liquid crystal compounds nor liquid crystal compositions formed by blending a plurality of liquid crystal compounds commonly used in the industry can balance high birefringence and good stability.

### SUMMARY

In view of this, embodiments of this application provide a liquid crystal composition and use thereof. The liquid crystal composition can balance high birefringence and good stability, and can form a liquid crystal device with excellent performance.

A first aspect of embodiments of this application provides a liquid crystal composition, where the liquid crystal composition includes at least one first compound represented by Formula (I), at least one second compound represented by Formula (II), at least one third compound represented by Formula (III), and an additive: 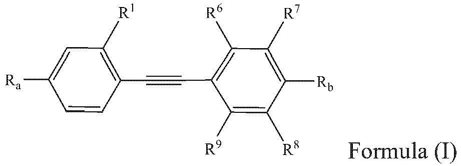 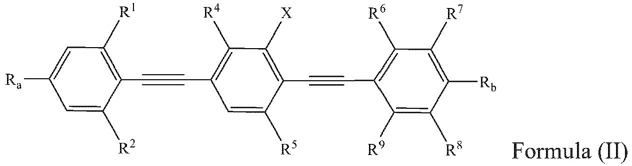 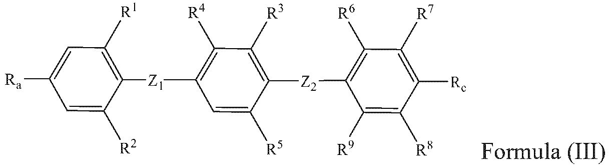
Rₐ and R_{b} in each occurrence are each independently selected from one of substituted or unsubstituted alkyl, substituted or unsubstituted alkoxy, substituted or unsubstituted alkenyl, substituted or unsubstituted alkenyloxy, substituted or unsubstituted alkynyl, substituted or unsubstituted alkynyloxy, or substituted or unsubstituted cycloalkyl; and R_{c} is selected from one of a halogen atom, substituted or unsubstituted alkyl, substituted or unsubstituted alkoxy, substituted or unsubstituted alkenyl, substituted or unsubstituted alkenyloxy, substituted or unsubstituted alkynyl, substituted or unsubstituted alkynyloxy, or substituted or unsubstituted cycloalkyl;
Z₁ and Z₂ are each independently selected from -CH=CH-, -CF=CF-, -CH=CF-, - CF=CH-, -CH₂-CH₂-, -CF₂-CF₂-, -CF₂-CH₂-, -CH₂-CF₂-, -CH₂-O-, -O-CH₂-, -CF₂O-, -OCF₂-, - CO-O-, -O-CO-, -N=N-, -CH=N-, -N=CH-, -C=C-, -C≡C-C≡C-, or a direct bond, and are not both -C≡C- or direct bonds; and
R¹, R², R³, R⁴, R⁵, R⁶, R⁷, R⁸ and R⁹ in each occurrence are each independently selected from one of a hydrogen atom, a deuterium atom, a tritium atom, a halogen atom, substituted or unsubstituted alkyl, substituted or unsubstituted alkoxy, or unsubstituted cycloalkyl. In Formula (I), Formula (II), and Formula (III), at least one of R⁸ and R⁹ is a hydrogen atom; and X is selected from one of a halogen atom, substituted or unsubstituted alkyl, or substituted or unsubstituted alkoxy.

Use of three types of liquid crystal compounds with specific structures represented by the foregoing Formula (I), Formula (II), and Formula (III), together with the additive, can ensure that the liquid crystal composition exhibits a high birefringence Δn of greater than 0.32, suitable viscosity and clearing point, resistance to crystallization at low temperatures, good high-temperature stability, and good ultraviolet stability.

In some implementations of this application, in Formula (III), Z₁ is -C=C-, and Z₂ is a direct bond; or Z₁ is a direct bond, and Z₂ is -C=C-. In this case, a substance represented by Formula (III) is easy to synthesize, and adding the substance to the liquid crystal composition can ensure that the liquid crystal composition has good comprehensive performance.

In an implementation of this application, substituents of the substituted alkyl, substituted alkoxy, substituted alkenyl, substituted alkenyloxy, substituted alkynyl, and substituted alkynyloxy each include one or more of a deuterium atom, a tritium atom, and a halogen atom; and substituents of the substituted cycloalkyl include one or more of a halogen atom, substituted or unsubstituted alkyl, substituted or unsubstituted alkoxy, substituted or unsubstituted alkenyl, substituted or unsubstituted alkenyloxy, substituted or unsubstituted alkynyl, substituted or unsubstituted alkynyloxy, and substituted or unsubstituted cycloalkyl. Introduction of various substituents may enrich variety of the three types of compounds represented by the foregoing Formula (I), Formula (II), and Formula (III), afford some compound products with slightly different performance for better use.

In an implementation of this application, the substituted or unsubstituted alkyl is substituted or unsubstituted C₁-C₂₀ alkyl; the substituted or unsubstituted alkoxy is substituted or unsubstituted C₁-C₂₀ alkoxy; the substituted or unsubstituted alkenyl is substituted or unsubstituted C₂-C₂₀ alkenyl; the substituted or unsubstituted alkenyloxy is substituted or unsubstituted C₂-C₂₀ alkenyloxy; the substituted or unsubstituted alkynyl is substituted or unsubstituted C₂-C₂₀ alkynyl; the substituted or unsubstituted alkynyloxy is substituted or unsubstituted C₂-C₂₀ alkynyloxy; and the substituted or unsubstituted cycloalkyl is substituted or unsubstituted C₃-C₂₀ cycloalkyl. Each group has an appropriate number of carbon atoms. This not only makes raw materials for preparing the compounds represented by the foregoing Formula (I), Formula (II), and Formula (III) readily available, but also ensures that the composition formed by mixing these compounds exhibits good liquid crystal properties.

In some implementations of this application, in X, R¹, R², R³, R⁴, R⁵, R⁶, R⁷, R⁸ and R⁹, the substituted or unsubstituted alkyl is fluorinated or unsubstituted C₁-C₈ alkyl; the substituted or unsubstituted alkoxy is fluorinated or unsubstituted C₁-C₈ alkoxy; and the unsubstituted cycloalkyl is unsubstituted C₃-C₁₀ cycloalkyl.

In some implementations of this application, in Formula (I), Formula (II), and Formula (III), at least one of R⁶ and R⁷ is a hydrogen atom; and in Formula (II) and Formula (III), at least one of R⁴ and R⁵ is a hydrogen atom. In this way, it can be ensured that substances represented by the foregoing Formula (I), Formula (II), and Formula (III) are readily available, and the composition formed by mixing these substances exhibits good liquid crystal properties.

In an implementation of this application, in the liquid crystal composition, a content of the first compound is 1% to 70% in percentage by mass, a content of the second compound is 1% to 70% in percentage by mass, and a content of the third compound is 1% to 70% in percentage by mass. In some implementations of this application, in the liquid crystal composition, the content of the first compound is 1% to 20% in percentage by mass, the content of the second compound is 15% to 50% in percentage by mass, and the content of the third compound is 40% to 65% in percentage by mass. Controlling the foregoing three types of compounds to occupy appropriate mass proportions in the liquid crystal composition is conducive to adjusting the viscosity, the birefringence, good stability, and the like of the liquid crystal composition.

In some implementations of this application, in Formula (I), R¹, R⁶, R⁷, R⁸, and R⁹ are all hydrogen atoms. In this case, the substance represented by Formula (I) is more readily available, and in combination with the foregoing Rₐ and R_{b}, the substance represented by Formula (I) can maintain good low-temperature stability.

In some implementations of this application, in Formula (II), R⁴, R⁵, R⁶, R⁷, R⁸ and R⁹ are all hydrogen atoms. In this case, the substance represented by Formula (II) is readily available and has resistance to crystallization at low temperatures.

In some implementations of this application, the at least one third compound includes one or more of a substance represented by the following Formula (III-A), a substance represented by the following Formula (III-B), and a substance represented by the following Formula (III-C):

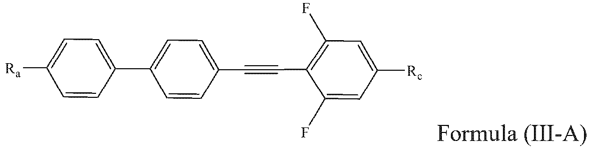

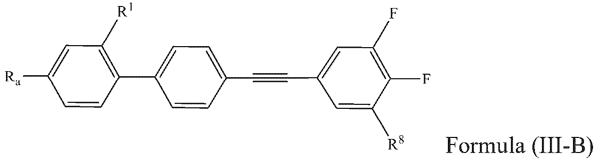

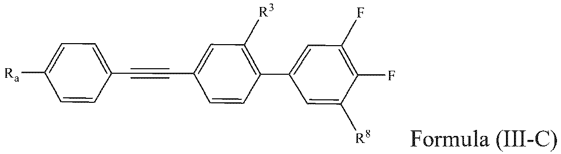

R¹ and R³ in each occurrence are each independently selected from one of a hydrogen atom, a fluorine atom, fluorinated or unsubstituted alkyl, or fluorinated or unsubstituted alkoxy; R⁸ in each occurrence is independently selected from one of a hydrogen atom or a fluorine atom; and R_{c} is selected from one of substituted or unsubstituted alkyl, substituted or unsubstituted alkoxy, or unsubstituted cycloalkyl.

In some implementations of this application, the at least one third compound includes the substance represented by Formula (III-A), and one or more of the substance represented by Formula (III-B) and the substance represented by Formula (III-C). In this case, in the liquid crystal composition, at least by using substances represented by Formula (III-B) and/or Formula (III-C), and substances represented by Formula (I), Formula (II), and Formula (III-A) in combination with the additive, the liquid crystal composition has higher birefringence, a suitable clearing point, good low-temperature stability, good high-temperature stability, and good ultraviolet stability.

In some implementations of this application, contents of the substance represented by Formula (III-A), the substance represented by Formula (III-B), and the substance represented by Formula (III-C) in the liquid crystal composition are each independently 50% or less in percentage by mass.

In some implementations of this application, in the liquid crystal composition, the content of the substance represented by Formula (III-A) is within a range of 14% to 30% in percentage by mass, the content of the substance represented by Formula (III-B) is within a range of 0% to 32% in percentage by mass, and the content of the substance represented by Formula (III-C) is within a range of 8% to 46% in percentage by mass. Use of appropriate amounts of substances represented by Formula (III-A), Formula (III-B), and Formula (III-C) in combination with substances represented by the foregoing Formula (I) and Formula (II) is conducive to achieving low viscosity, high birefringence, and excellent overall stability of the liquid crystal composition.

In some implementations of this application, the liquid crystal composition further includes a substance represented by the following Formula (IV):

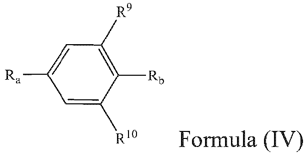

R⁹ and R¹⁰ are each independently selected from one of a hydrogen atom, a deuterium atom, a tritium atom, a halogen atom, substituted or unsubstituted alkyl, or substituted or unsubstituted alkoxy. Introducing the substance represented by Formula (IV) into the liquid crystal composition can improve low-temperature stability of the liquid crystal composition, and adjust viscosity, a clearing point, and the like.

In an implementation of this application, the additive includes one or more of a hindered phenol additive, a hindered amine additive, and a benzotriazole additive. Selecting one or more additives in the liquid crystal composition from the three types can significantly improve high-temperature stability and ultraviolet stability of a liquid crystal mixture system formed by the substances represented by the foregoing Formula (I), Formula (II), and Formula (III).

In an implementation of this application, a content of the additive in the liquid crystal composition is 5% or less in percentage by mass. Introduction of appropriate amounts of the additives can effectively improve various stabilities of the liquid crystal composition, while not significantly affecting birefringence of the liquid crystal composition.

In an implementation of this application, the birefringence of the liquid crystal composition is within a range of 0.32 to 0.42, the clearing point of the liquid crystal composition is within a range of 100°C to 140°C, and the liquid crystal composition exhibits no abnormality after being stored at -20°C for 500 hours.

A second aspect of embodiments of this application provides use of the liquid crystal composition according to the first aspect of embodiments of this application in a liquid crystal device. The liquid crystal composition may be used in a liquid crystal layer of the liquid crystal device, to improve performance of the liquid crystal device.

A third aspect of embodiments of this application provides a liquid crystal device, where the liquid crystal device includes a liquid crystal layer, and the liquid crystal layer includes the liquid crystal composition according to the first aspect of embodiments of this application.

In some implementations of this application, the liquid crystal device includes a cover substrate, a transparent electrode layer, a first alignment layer, the liquid crystal layer, a second alignment layer, a passivation layer, a backplane electrode layer, and a silicon substrate that are sequentially stacked. In this case, the liquid crystal device may be an LCoS device.

A fourth aspect of embodiments of this application provides an apparatus, where the apparatus includes the liquid crystal device according to the third aspect of embodiments of this application. The apparatus includes one or more of a wavelength selective switch, a microwave scanning antenna, a liquid crystal optical antenna, a liquid crystal optical waveguide, a varifocal lens device, a liquid crystal prism, a grating, a lidar, a beam tracker, a projector, an optical projection system, a flat-panel display, a holographic display, an image acquisition device, an optical communication device, and a wireless communication device.

Based on excellent performance of the liquid crystal device, various apparatuses including the liquid crystal device also exhibit favorable performance and outstanding market competitiveness.

### BRIEF DESCRIPTION OF DRAWINGS

FIG. 1 is a diagram of a structure of a liquid crystal device according to an embodiment of this application; and
FIG. 2 is a diagram of a structure of a wavelength selective switch according to an embodiment of this application.

### DESCRIPTION OF EMBODIMENTS

The following describes embodiments of this application with reference to accompanying drawings in embodiments of this application.

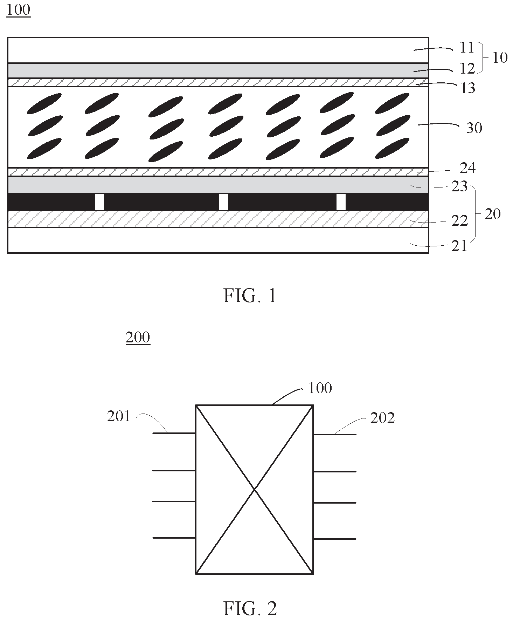

Liquid crystal materials have adjustable electro-optic characteristics. Liquid crystal devices made from liquid crystal materials have been widely used in fields such as display, optical communications, wireless communications, and laser detection, for example, vehicle-mounted display, laser projection, lidars, and wavelength selective switches (wavelength selective switch, WSS for short). Liquid crystal devices made by using a liquid crystal on silicon (Liquid crystal on silicon, LCoS for short, also referred to as liquid crystal silicon) technology are widely used. FIG. 1 is a diagram of a structure of a liquid crystal device according to an embodiment of this application. In some embodiments, the liquid crystal device shown in FIG. 1 may specifically be an LCoS device, and may be used in a WSS and the like, and may serve as an optical switching engine of the WSS to implement a phase modulation function.

Refer to FIG. 1, the liquid crystal device 100 includes a cover plate 10, a silicon-based backplane 20, and a liquid crystal layer 30 disposed between the cover plate 10 and the silicon-based backplane 20. The liquid crystal layer 30 includes a plurality of liquid crystal molecules (illustrated as black elongated ellipses in FIG. 1). The liquid crystal molecules can deflect under certain voltage conditions to implement phase modulation of a light beam. The cover plate 10 may include a cover substrate 11 and a transparent electrode layer 12 disposed on a side surface of the cover substrate 11. A first alignment layer 13 is further provided on a side of the transparent electrode layer 12 away from the cover substrate 11. The silicon-based backplane 20 includes a silicon substrate 21 and a backplane electrode layer 22 and a passivation layer 23 that are sequentially stacked on a side surface of the silicon substrate 21. A second alignment layer 24 is further provided on the silicon-based backplane 20. Specifically, the second alignment layer 24 is provided on a side of the passivation layer 23 away from the silicon substrate 21. When the cover plate 10 and the silicon-based backplane 20 are assembled to form the liquid crystal device 100, the cover plate 10 and the silicon-based backplane 20 are disposed opposite to each other, and the liquid crystal layer 30 is located between the first alignment layer 13 and the second alignment layer 24. In this case, the liquid crystal device 100 includes the cover substrate 11, the transparent electrode layer 12, the first alignment layer 13, the liquid crystal layer 30, the second alignment layer 24, the passivation layer 23, the backplane electrode layer 22, and the silicon substrate 21 that are sequentially stacked. It should be understood that sizes, positions, and the like of the layers in the liquid crystal device 100 in FIG. 1 are all examples, and do not constitute a limitation on this application.

The cover substrate 11 is typically made of glass, and may be configured to protect the liquid crystal layer 30 and transmit optical signals, and may further support the transparent electrode layer 12. The transparent electrode layer 12 may be an indium tin oxide (Indium Tin Oxide, ITO for short) layer, an indium zinc oxide (Indium Zinc Oxide, IZO for short) layer, or the like. The transparent electrode layer 12 exhibits good conductivity and transparency, and is configured to transmit optical signals and conduct electricity. In some embodiments, the cover plate 10 is made of ITO conductive glass.

The backplane electrode layer 22 is configured to be electrically connected to the transparent electrode layer 12, to form, under an effect of an external circuit, an electric field that can control rotation of the liquid crystal molecules. The backplane electrode layer 22 is typically formed from a pure metal or an alloy. The passivation layer 23 is typically formed from a low-refractive-index dielectric material such as silicon oxide or silicon nitride, and can provide protection, planarization, and other functions for the backplane electrode layer 22. In addition, the silicon substrate 21 may include a driving circuit, and the driving circuit may be a CMOS (which is an abbreviation of complementary metal oxide semiconductor) integrated circuit chip.

The first alignment layer 13 on the cover plate 10 and the second alignment layer 24 on the silicon-based backplane 20 may define an alignment direction of the liquid crystal molecules in the liquid crystal layer 30 under zero voltage. In some embodiments, when no voltage is applied to the liquid crystal layer 30, the first alignment layer 13 and the second alignment layer 24 control alignment of the liquid crystal molecules to be parallel.

When a specific voltage is applied between the backplane electrode layer 22 and the transparent electrode layer 12 through the driving circuit in the silicon-based backplane 20, the liquid crystal molecules in the liquid crystal layer 30 rotate under an effect of the voltage. Because the liquid crystal molecules exhibit birefringence under an effect of the electric field, different electric field strengths may cause the liquid crystal molecules to rotate to different degrees, so that a refractive index of the liquid crystal molecules changes, thereby implementing phase adjustment on the light beam transmitted through the liquid crystal molecules.

The liquid crystal layer 30 is generally formed by filling a liquid crystal composition into a space reserved between the cover plate 10 and the silicon-based backplane 20 that are disposed opposite to each other, and the liquid crystal composition is usually formed by mixing a variety of liquid crystal compounds (also referred to as liquid crystal components). However, the liquid crystal composition currently used in the liquid crystal device 100 cannot balance high birefringence, a suitable clearing point, and good stability, so that performance of the liquid crystal device cannot effectively meet practical use requirements. Therefore, embodiments of this application provide a liquid crystal composition that can be used in the liquid crystal device 100 and that has excellent comprehensive performance and related use thereof.

Specifically, an embodiment of this application provides a liquid crystal composition, where the liquid crystal composition includes liquid crystal components and an additive, and the liquid crystal components include at least one first compound represented by Formula (I), at least one second compound represented by Formula (II), and at least one third compound represented by Formula (III): 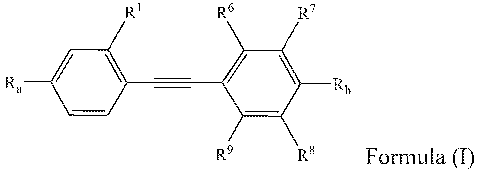 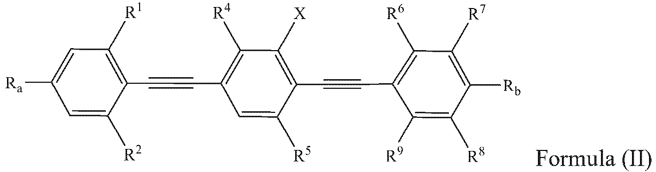 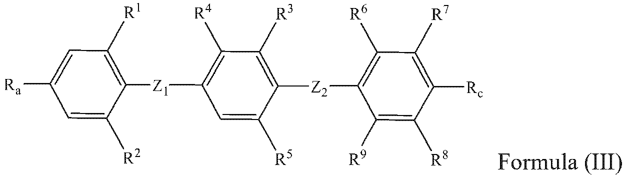
Rₐ and R_{b} in each occurrence are each independently selected from one of substituted or unsubstituted alkyl, substituted or unsubstituted alkoxy, substituted or unsubstituted alkenyl, substituted or unsubstituted alkenyloxy, substituted or unsubstituted alkynyl, substituted or unsubstituted alkynyloxy, or substituted or unsubstituted cycloalkyl; and R_{c} is selected from one of a halogen atom, substituted or unsubstituted alkyl, substituted or unsubstituted alkoxy, substituted or unsubstituted alkenyl, substituted or unsubstituted alkenyloxy, substituted or unsubstituted alkynyl, substituted or unsubstituted alkynyloxy, or substituted or unsubstituted cycloalkyl;
Z₁ and Z₂ are each independently selected from -CH=CH-, -CF=CF-, -CH=CF-, - CF=CH-, -CH₂-CH₂-, -CF₂-CF₂-, -CF₂-CH₂-, -CH₂-CF₂-, -CH₂-O-, -O-CH₂-, -CF₂O-, -OCF₂-, - CO-O-, -O-CO-, -N=N-, -CH=N-, -N=CH-, -C=C-, -C≡C-C≡C-, or a direct bond, and are not both -C≡C- or direct bonds; and
R¹, R², R³, R⁴, R⁵, R⁶, R⁷, R⁸ and R⁹ in each occurrence are each independently selected from one of a hydrogen atom, a deuterium atom, a tritium atom, a halogen atom, substituted or unsubstituted alkyl, substituted or unsubstituted alkoxy, or unsubstituted cycloalkyl. In the foregoing Formula (I), Formula (II), and Formula (III), at least one of R⁸ and R⁹ is a hydrogen atom; and X is selected from one of a halogen atom, substituted or unsubstituted alkyl, or substituted or unsubstituted alkoxy.

In the liquid crystal composition, blending of three types of liquid crystal compounds with specific structures, together with the additive, can ensure that the resulting liquid crystal composition exhibits a high birefringence Δn of greater than 0.32, suitable viscosity and clearing point, resistance to crystallization at low temperatures, good high-temperature stability, and good ultraviolet stability. The foregoing non-hydrogen groups Rₐ, R_{b}, and R_{c} in Formula (I), Formula (II), and Formula (III) are conducive to ensuring good low-temperature stability of the liquid crystal composition. Particularly, a substance represented by Formula (II) can ensure high birefringence of the liquid crystal composition. In a structure of Formula (II) formed by three benzene rings sequentially connected via acetylene bonds, the selection of an X group on an intermediate benzene ring is conducive to maintaining stability of the substance represented by Formula (II), thereby achieving good low-temperature stability of the overall liquid crystal composition.

In the foregoing various selections of Z₁ and Z₂ in this application, -CH=CH- may be referred to as 1,2-vinylene; -CF=CF- may be referred to as perfluoro-1,2-vinylene; -CH=CF- or - CF=CH- may be referred to as monofluoro-1,2-vinylene; -CH₂-CH₂- may be referred to as 1,2-ethylene; -CF₂-CF₂- may be referred to as perfluoro-1,2-ethylene; -CF₂-CH₂- or -CH₂-CF₂- may be referred to as difluoro-1,2-ethylene; -CH₂-O- or -O-CH₂- may be referred to as a methylene ether bridge; -CF₂O- or -OCF₂- may be referred to as a difluoromethylene ether bridge; -CO-O- or -O-CO- may be referred to as ester bond; -C=C- may be referred to as acetylene bond, and -C=C-C=C- may be referred to as 1,3-diyne bond.

In this application, when Z₁ or Z₂ in Formula (III) is a direct bond, it indicates that two benzene rings are directly connected. Restricting Z₁ and Z₂ from both being direct bonds can ensure high birefringence of a substance represented by Formula (III). In addition, restricting Z₁ and Z₂ from both being -C=C- can ensure that Formula (III) and Formula (II) are not the same general formula when a selection range of R₂ in Formula (III) is the same as a selection range of X.

In some implementations of this application, in Formula (III), Z₁ is -C=C-, and Z₂ is a direct bond; or Z₁ is a direct bond, and Z₂ is -C=C-. In this case, the substance represented by Formula (III) is easy to synthesize, and adding the substance to the liquid crystal composition can ensure that the liquid crystal composition has good comprehensive performance, especially high birefringence.

In this application, the foregoing "hydrogen atom" is also referred to as a "protium atom (¹H)". The deuterium atom is also referred to as "heavy hydrogen", and is denoted by a chemical symbol ²H or D. The tritium atom is denoted by a chemical symbol ³H. The foregoing halogen atom may be fluorine (F), chlorine (Cl), bromine (Br), or iodine (I), and a fluorine atom is more commonly used.

In an implementation of this application, substituents of the foregoing substituted alkyl, substituted alkoxy, substituted alkenyl, substituted alkenyloxy, substituted alkynyl, and substituted alkynyloxy each include one or more of a deuterium atom, a tritium atom, and a halogen atom; substituents of the foregoing substituted cycloalkyl include one or more of a halogen atom, substituted or unsubstituted alkyl, substituted or unsubstituted alkoxy, substituted or unsubstituted alkenyl, substituted or unsubstituted alkenyloxy, substituted or unsubstituted alkynyl, substituted or unsubstituted alkynyloxy, and substituted or unsubstituted cycloalkyl (for example, alkyl-substituted cycloalkyl). Introduction of various substituents may enrich variety of the compounds, afford some compound products with slightly different performance for better use. The substituted alkyl is used as an example. "Substituted" specifically means that any one or more hydrogen atoms in the alkyl are substituted with the foregoing substituents.

In some implementations, the substituents of the foregoing substituted cycloalkyl are selected from one of substituted or unsubstituted alkyl, substituted or unsubstituted alkoxy, substituted or unsubstituted alkenyl, substituted or unsubstituted alkenyloxy, substituted or unsubstituted alkynyl, substituted or unsubstituted alkynyloxy, or alkyl-substituted or unsubstituted cycloalkyl. In this case, the foregoing compounds with the substituted cycloalkyl are easy to synthesize.

In some implementations, the substituents of the foregoing substituted alkyl, substituted alkoxy, substituted alkenyl, substituted alkenyloxy, substituted alkynyl, and substituted alkynyloxy are halogen atoms. In this case, the substituted alkyl may be referred to as halogenated alkyl, the substituted alkoxy may be referred to as halogenated alkoxy, the substituted alkenyl may be referred to as halogenated alkenyl, the substituted alkenyloxy may be referred to as halogenated alkenyloxy, the substituted alkynyl may be referred to as halogenated alkynyl, and the substituted alkynyloxy may be referred to as halogenated alkynyloxy. The halogenation may be partial halogenation or perhalogenation. "Partial halogenation" means that a part of the hydrogen atoms in the foregoing group is substituted with the halogen atom. "Perhalogenation" means that all hydrogen atoms in the foregoing group are substituted with the halogen atoms. In some embodiments, the halogen atom is a fluorine atom. In this case, the halogenated alkyl is used as an example, and is specifically fluorinated alkyl.

In this application, the foregoing substituted or unsubstituted alkyl is an alkyl group having a linear or branched chain. The substituted or unsubstituted alkyl may specifically be substituted or unsubstituted C₁-C₂₀ alkyl. For the substituted alkyl, the number of carbon atoms ranging from 1 to 20 specifically refers to the number of carbon atoms of the unsubstituted alkyl corresponding to the substituted alkyl. In some implementations, the substituted or unsubstituted alkyl is substituted or unsubstituted C₁-C₂₀ linear alkyl. In this case, a mixture of the foregoing compounds bearing the substituted or unsubstituted linear alkyl may exhibit good liquid crystal properties. In some embodiments, the substituted or unsubstituted alkyl is substituted or unsubstituted C₁-C₁₀ alkyl, substituted or unsubstituted C₁-C₈ alkyl, substituted or unsubstituted C₁-C₆ alkyl, or the like, for example, specifically substituted or unsubstituted methyl, substituted or unsubstituted ethyl, substituted or unsubstituted n-propyl, substituted or unsubstituted n-butyl, substituted or unsubstituted n-pentyl, or substituted or unsubstituted n-hexyl. For example, the substituted alkyl may be deuterated methyl, tritiated methyl, trifluoromethyl, deuterated ethyl, tritiated ethyl, fluorinated ethyl, deuterated propyl, tritiated propyl, fluorinated propyl, fluorinated n-butyl, and fluorinated n-pentyl.

In an implementation of this application, the foregoing substituted or unsubstituted alkoxy is chain alkoxy, and may specifically be linear alkoxy, or may be branched alkoxy. The substituted or unsubstituted alkoxy may be regarded as a structure formed by bonding the substituted or unsubstituted alkyl to an oxygen atom. Therefore, for the number of carbon atoms of the substituted or unsubstituted alkoxy, refer to the foregoing descriptions of the substituted or unsubstituted alkyl in this application. In an implementation of this application, the substituted or unsubstituted alkoxy may be substituted or unsubstituted C₁-C₂₀ alkoxy, and may further be substituted or unsubstituted C₁-C₁₀ alkoxy, C₁-C₈ alkoxy, C₁-C₆ alkoxy, or the like. In some implementations, the substituted or unsubstituted alkoxy may be substituted or unsubstituted C₁-C₂₀ linear alkoxy, C₁-C₁₀ linear alkoxy, C₁-C₈ linear alkoxy, C₁-C₆ linear alkoxy, or the like. As an example, the substituted or unsubstituted alkoxy may be unsubstituted methoxy (-OCH₃), fluorinated methoxy (-OCF₃), deuterated methoxy, tritiated methoxy, substituted or unsubstituted ethoxy (-OCH₂CH₃), substituted or unsubstituted propoxy (-OCH₂CH₂CH₃), and substituted or unsubstituted butoxy (-OCH₂CH₂CH₂CH₃).

In an implementation of this application, the foregoing substituted or unsubstituted alkenyl may be substituted or unsubstituted C₂-C₂₀ alkenyl. The alkenyl is chain alkenyl, and may specifically be linear alkenyl or branched alkenyl. In some implementations, the foregoing substituted or unsubstituted alkenyl is substituted or unsubstituted C₂-C₂₀ linear alkenyl. A mixture of the foregoing compounds bearing the substituted or unsubstituted linear alkenyl may exhibit good liquid crystal properties. In some embodiments, the substituted or unsubstituted alkenyl may be substituted or unsubstituted C₂-C₁₀ chain alkenyl, and substituted or unsubstituted C₂-C₆ chain alkenyl, for example, may specifically be substituted or unsubstituted vinyl (for example, CH₂=CH-), substituted or unsubstituted propenyl, and substituted or unsubstituted butenyl. For example, the substituted alkenyl may be deuterated vinyl, tritiated vinyl, fluorinated vinyl (for example, CF₂=CH-), and fluorinated propenyl.

In an implementation of this application, the foregoing substituted or unsubstituted alkenyloxy is chain alkenyloxy, and may specifically be linear alkenyloxy, or may be branched alkenyloxy, preferably the linear alkenyloxy. The substituted or unsubstituted alkenyloxy may be regarded as a structure formed by bonding the substituted or unsubstituted alkenyl to an oxygen atom. Therefore, for the number of carbon atoms of the substituted or unsubstituted alkenyloxy, refer to descriptions of the substituted or unsubstituted alkenyl in this application. In an implementation of this application, the substituted or unsubstituted alkenyloxy may be substituted or unsubstituted C₂-C₂₀ alkenyloxy, and may further be substituted or unsubstituted C₂-C₁₀ alkenyloxy, C₂-C₆ alkenyloxy, or the like. As an example, the substituted or unsubstituted alkenyloxy may be substituted or unsubstituted vinyloxy, propenyloxy, butenyloxy, or the like.

In an implementation of this application, the foregoing substituted or unsubstituted alkynyl may be substituted or unsubstituted C₂-C₂₀ alkynyl, and may specifically be linear alkynyl, or may be branched alkynyl. In some implementations, the foregoing substituted or unsubstituted alkynyl is substituted or unsubstituted C₂-C₂₀ linear alkynyl. A mixture of the foregoing compounds bearing the substituted or unsubstituted linear alkynyl may exhibit better liquid crystal properties. The substituted or unsubstituted alkynyl may be substituted or unsubstituted C₂-C₁₀ chain alkynyl, and substituted or unsubstituted C₂-C₆ chain alkynyl, for example, may specifically be substituted or unsubstituted ethynyl, substituted or unsubstituted propynyl, and substituted or unsubstituted butynyl. For example, the substituted alkynyl may be deuterated ethynyl, tritiated ethynyl, fluorinated ethynyl, fluorinated propynyl, and fluorinated butynyl.

In an implementation of this application, the foregoing substituted or unsubstituted alkynyloxy is chain alkynyloxy, and may specifically be linear alkynyloxy, or may be branched alkynyloxy, preferably the linear alkynyloxy. The substituted or unsubstituted alkynyloxy may be regarded as a structure formed by bonding the substituted or unsubstituted alkynyl to an oxygen atom. Therefore, for the number of carbon atoms of the substituted or unsubstituted alkynyloxy, refer to descriptions of the substituted or unsubstituted alkynyl in this application. In an implementation of this application, the substituted or unsubstituted alkynyloxy may be substituted or unsubstituted C₂-C₂₀ alkynyloxy, and may further be substituted or unsubstituted C₂-C₁₀ alkynyloxy, C₂-C₆ alkynyloxy, or the like. As an example, the substituted or unsubstituted alkynyloxy may be substituted or unsubstituted ethynyloxy, propynyloxy, butynyloxy, or the like.

In an implementation of this application, the foregoing substituted or unsubstituted cycloalkyl may be the substituted or unsubstituted C₃-C₂₀ cycloalkyl. In some embodiments, the substituted or unsubstituted cycloalkyl is substituted or unsubstituted C₃-C₁₀ cycloalkyl, substituted or unsubstituted C₃-C₆ cycloalkyl, or the like, for example, specifically substituted or unsubstituted cyclopropyl, substituted or unsubstituted cyclobutyl, substituted or unsubstituted cyclopentyl, or substituted or unsubstituted cyclohexyl. For example, the substituted cycloalkyl may be deuterated cyclopentyl, tritiated cyclopentyl, methyl-substituted cyclopentyl, deuterated cyclohexyl, tritiated cyclohexyl, fluorinated cyclohexyl, methyl-substituted cyclohexyl, trifluoromethyl-substituted cyclohexyl, and difluorovinyl-substituted cyclohexyl.

In some implementations of this application, when X, R¹, R², R³, R⁴, R⁵, R⁶, R⁷, R⁸ and R⁹ are substituted or unsubstituted alkyls, the substituted or unsubstituted alkyls are specifically fluorinated or unsubstituted C₁-C₈ alkyls; when X, R¹, R², R³, R⁴, R⁵, R⁶, R⁷, R⁸ and R⁹ are substituted or unsubstituted alkoxys, the substituted or unsubstituted alkoxys are specifically fluorinated or unsubstituted C₁-C₈ alkoxys; when R¹, R², R³, R⁴, R⁵, R⁶, R⁷, R⁸ and R⁹ are unsubstituted cycloalkyls, the unsubstituted cycloalkyls are specifically unsubstituted C₃-C₁₀ cycloalkyls.

In Formula (I), Formula (II), and Formula (III) of this application, at least one of R⁸ and R⁹ is a hydrogen atom. That is, both R⁸ and R⁹ are not non-hydrogen groups mentioned above (for example, halogen atoms, alkyls, alkoxys, and cycloalkyls). In this way, it can be ensured that a mixture formed by the foregoing various compounds can exhibit good liquid crystal properties. It should be noted that limitations on R⁸ and R⁹ herein are all made for R⁸ and R⁹ in a same general formula. Similar descriptions in the following of this application should be understood similarly. In some implementations of this application, in Formula (I), Formula (II), and Formula (III), at least one of R⁶ and R⁷ is a hydrogen atom. Formula (II) is used as an example. When R⁹ is a hydrogen atom and R⁸ is a non-hydrogen group, R⁶ is a hydrogen atom, and R⁷ may be a non-hydrogen group or a hydrogen atom. When R⁸ is a hydrogen atom and R⁹ is a non-hydrogen group, R⁷ is a hydrogen atom, and R⁶ may be a non-hydrogen group or a hydrogen atom. In addition, in some other implementations of this application, when neither R⁶ nor R⁷ is a hydrogen atom, both R⁸ and R⁹ are hydrogen atoms.

In some implementations of this application, in Formula (II) and Formula (III), at least one of R⁴ and R⁵ is a hydrogen atom. In this way, it can be ensured that the composition formed by mixing the substance represented by Formula (II), the substance represented by Formula (III), and a substance represented by Formula (I) presents good liquid crystal properties. Formula (III) is used as an example, when R³ is not a hydrogen atom, both R⁴ and R⁵ may be hydrogen atoms; or R⁴ may be a hydrogen atom and R⁵ may be a non-hydrogen group; or R⁵ may be a hydrogen atom and R⁴ may be a non-hydrogen group. Similarly, when R³ is a hydrogen atom, both R⁴ and R⁵ may be hydrogen atoms, or one of R⁴ and R⁵ is a hydrogen atom. Similarly, at least one of R⁶ and R⁸ is a hydrogen atom, and at least one of R⁷ and R⁹ is a hydrogen atom.

In some embodiments of this application, in Formula (II) and Formula (III), at least one of R¹ and R⁴ is a hydrogen atom, at least one of R³ and R⁶ is a hydrogen atom, and at least one of R⁵ and R⁹ is a hydrogen atom. In a same general formula, restricting adjacent groups on two adjacent benzene rings from both being non-hydrogen groups can ensure that difficulty in synthesization of the substance represented by Formula (II) and the substance represented by Formula (III) is greatly reduced.

In some implementations of this application, in Formula (I), R¹, R⁶, R⁷, R⁸, and R⁹ are all hydrogen atoms. In this case, Formula (I) is specifically as follows:

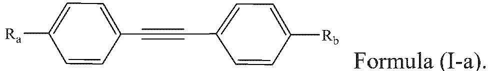

In some implementations of this application, in Formula (II), R⁶ and R⁹ are hydrogen atoms. In this case, Formula (II) is specifically as follows:

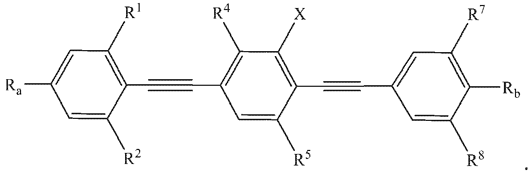

In Formula, a meaning of each symbol is as defined above in this application. As described above, at least one of R⁴ and R⁵ is a hydrogen atom. When R⁴ is not a hydrogen atom, R¹ is a hydrogen atom. Further, both R⁴ and R³ are hydrogen atoms. At least one of R⁷ and R⁸ is the foregoing non-hydrogen group (for example, both are fluorine atoms, or one is a hydrogen atom, and the other is a fluorine atom), or both R⁷ and R⁸ are hydrogen atoms. In some embodiments, in Formula (II), R⁴, R⁵, R⁶, R⁷, R⁸, and R⁹ are all hydrogen atoms. In this case, Formula (II) is specifically as follows:

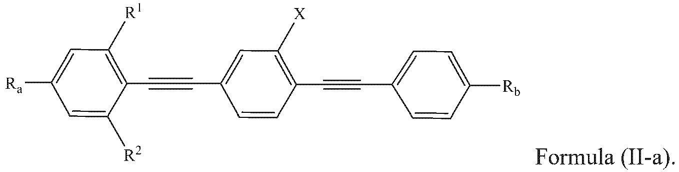

In some cases, in Formula (II-a), R¹ and R² may each be independently selected from a hydrogen atom or a fluorine atom. For example, both R¹ and R² are hydrogen atoms, or both R¹ and R² are fluorine atoms.

In some other implementations of this application, in Formula (II), both R⁷ and R⁸ are hydrogen atoms, and at least one of R⁶ and R⁹ is the foregoing non-hydrogen group. Further, both R⁴ and R⁵ are hydrogen atoms. Still further, both R¹ and R² may be hydrogen atoms.

It should be noted that the liquid crystal composition may include one first compound represented by Formula (I) or a plurality of first compounds with different structures that conform to Formula (I). Similarly, the liquid crystal composition may include one or more second compounds represented by Formula (II) and one or more third compounds represented by Formula (III). Substances represented by Formula (I), Formula (II), and Formula (III) are constituents of the liquid crystal components in the liquid crystal composition.

In an implementation of this application, in the liquid crystal composition, contents of the first compound, the second compound, and the third compound are each independently within a range of 1% to 70% in percentage by mass, for example, each independently being 3%, 5%, 10%, 15%, 20%, 30%, 35%, 40%, 42%, 45%, 50%, 55%, 60%, 65%, or 68% in percentage by mass.

In some implementations, in the liquid crystal composition, a content of the substance represented by Formula (I) is within a range of 1% to 20% in percentage by mass, for example, specifically 2%, 5%, 8%, 9%, 10%, 11%, 12%, 15% and 18%. In some embodiments, the content of the substance represented by Formula (I) is 5% to 15% in percentage by mass. In the liquid crystal composition, a content of the substance represented by Formula (II) is within a range of 15% to 50% in percentage by mass, for example, specifically 20%, 22%, 24%, 25%, 27%, 28%, 30%, 32%, 34%, 36%, 40%, 42%, 45%, or 48%. In some embodiments, the content of the substance represented by Formula (II) is 20% to 45% in percentage by mass. In the liquid crystal composition, a content of the substance represented by Formula (III) is within a range of 40% to 65% in percentage by mass, for example, specifically 42%, 43%, 45%, 46%, 47%, 48%, 50%, 52%, 55%, 57%, 60%, 62%, or 64%. In some embodiments, the content of the substance represented by Formula (III) is 45% to 65% in percentage by mass. Controlling the liquid crystal composition to contain a specific amount of each of the substance represented by Formula (I), the substance represented by Formula (II), and the substance represented by Formula (III) is conducive to enabling the liquid crystal composition to have all of low viscosity, high birefringence, good light/thermal stability, and the like.

In some implementations of this application, the liquid crystal composition includes at least one of third compounds represented by the following Formula (III-A), the following Formula (III-B), and the following Formula (III-C). In other words, a general formula represented by the foregoing Formula (III) includes one or more of the following Formula (III-A), the following Formula (III-B), and the following Formula (III-C).

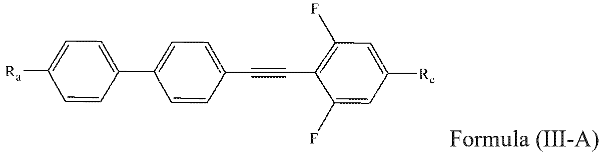

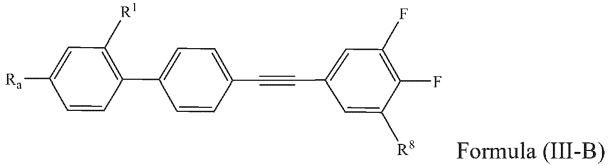

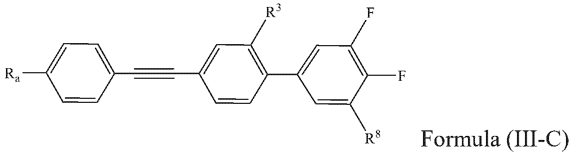

In Formula (III-A), Formula (III-B), and Formula (III-C), a selection range of each symbol is defined above in this application.

A structure represented by Formula (III-A) corresponds to a case where, in the foregoing Formula (III), Z₁ is a direct bond, Z₂ is -C≡C-, R¹ to R⁵, R⁷ and R⁸ are all hydrogen atoms, and R⁶ and R⁹ are fluorine atoms. A structure represented by Formula (III-B) corresponds to a case where, in the foregoing Formula (III), Z₁ is a direct bond, Z₂ is -C≡C-, R², R³, R⁴, R⁵, R⁶ and R⁹ are hydrogen atoms, and both R⁷ and R_{c} are fluorine atoms. A structure represented by Formula (III-C) corresponds to a case where, in the foregoing Formula (III), Z₁ is -C=C-, Z₂ is a direct bond, R¹, R², R⁴, R⁵, R⁶ and R⁹ are all hydrogen atoms, and both R⁶ and R_{c} are fluorine atoms.

In some implementations of this application, in Formula (III-A), R_{c} is selected from one of substituted or unsubstituted alkyl, substituted or unsubstituted alkoxy, or unsubstituted cycloalkyl. In Formula (III-B) and Formula (III-C), R⁸ in each occurrence is independently selected from a hydrogen atom (H) or a fluorine atom (F); and R¹ and R³ in each occurrence are each independently selected from one of a hydrogen atom (H), a fluorine atom (F), fluorinated or unsubstituted alkyl, or fluorinated or unsubstituted alkoxy. In this case, the compounds represented by Formula (III-A), Formula (III-B), and Formula (III-C) are easy to synthesize, and viscosity of the compounds is suitable. Further, R¹ and R³ are each independently selected from H, F, or unsubstituted C₁-C₆ alkyl (for example, methyl, ethyl, or n-propyl).

In this application, contents of a substance represented by the foregoing Formula (III-A), a substance represented by the foregoing Formula (III-B), and a substance represented by the foregoing Formula (III-C) in the liquid crystal composition are each independently 50% or less in percentage by mass. For example, the content of the substance represented by Formula (III-A) in the liquid crystal composition is within a range of 1% to 50% in percentage by mass, and contents of the substance represented by Formula (III-B) and the substance represented by Formula (III-C) in the liquid crystal composition are each independently within a range of 0% to 50% in percentage by mass. In some embodiments, the content of the substance represented by Formula (III-A) in the liquid crystal composition is within a range of 14% to 30% in percentage by mass, for example, specifically 15%, 16%, 20%, 25%, 25%, or 29%. The content of the substance represented by Formula (III-B) in the liquid crystal composition is within a range of 0% to 32% in percentage by mass, and may further be within a range of 1% to 31%, for example, specifically 5%, 10%, 15%, 20%, 22%, 25%, 26%, 28%, or 30%. The content of the substance represented by Formula (III-C) in the liquid crystal composition is within a range of 8% to 46% in percentage by mass, for example, specifically 9%, 10%, 15%, 20%, 25%, 30%, 35%, 40%, 42%, or 45%.

In some implementations of this application, the general formula represented by the foregoing Formula (III) includes Formula (III-A), and one or more of Formula (III-B) and Formula (III-C).

In some implementations of this application, the liquid crystal components in the liquid crystal composition includes a substance represented by Formula (I-a), a substance represented by Formula (II-a), and the substance represented by Formula (III-A), and includes one or more of the substance represented by Formula (III-B) and the substance represented by Formula (III-C). In other words, the liquid crystal composition includes all substances represented by Formula (I-a), Formula (II-a), Formula (III-A), Formula (III-B), and Formula (III-C); or includes substances represented by Formula (I-a), Formula (II-a), Formula (III-A), and Formula (III-B); or includes substances represented by Formula (I-a), Formula (II-a), Formula (III-A), and Formula (III-C). In this case, the liquid crystal composition has high birefringence and a low clearing point, to facilitate subsequent processing and utilization of the liquid crystal composition; moreover, the liquid crystal composition has low viscosity and high stability, so that various performances can be well balanced, and the liquid crystal composition has broader use prospects.

In some implementations of this application, the liquid crystal components in the liquid crystal composition further includes a substance represented by the following Formula (IV):

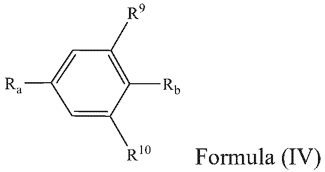

R⁹ and R¹⁰ are each independently selected from one of a hydrogen atom, a deuterium atom, a tritium atom, a halogen atom, substituted or unsubstituted alkyl, or substituted or unsubstituted alkoxy. For meanings of substituted or unsubstituted alkyl, substituted or unsubstituted alkoxy, Rₐ, and R_{b} herein, refer to the foregoing descriptions of this application. In some implementations, one of Rₐ and R_{b} is substituted or unsubstituted cycloalkyl. Introducing the substance represented by the foregoing Formula (IV) into the liquid crystal composition as a liquid crystal component can improve low-temperature stability of the liquid crystal composition, and adjust viscosity, a clearing point, and the like. In an implementation of this application, a content of the substance represented by the foregoing Formula (IV) in the liquid crystal composition is 5% or less in percentage by mass, for example, specifically 0.1%, 0.5%, 1%, 2%, 3%, 4%, 4.5%, or 5%.

The liquid crystal composition in this application contains the additive. Presence of the additive can improve resistance of a liquid crystal mixture system formed by the various liquid crystal components to ultraviolet light, high temperature, oxidation, and the like. In an implementation of this application, the additive in the liquid crystal composition may include one or more of a hindered phenol additive, a hindered amine additive, and a benzotriazole additive, but is not limited thereto. Selecting one or more additives in the liquid crystal composition from the three types can significantly improve stability of the liquid crystal mixture system formed by the substances represented by the foregoing Formula (I), Formula (II), and Formula (III). In some embodiments, the additives include all of the hindered phenol additive, the hindered amine additive, and the benzotriazole additive. Therefore, the liquid crystal composition can obtain higher optical/thermal stability.

In an implementation of this application, a content of the additive in the liquid crystal composition is 5% or less in percentage by mass, that is, within a range of greater than 0% and less than or equal to 5%. Introduction of appropriate amounts of the additives into the liquid crystal composition can effectively improve performance of the liquid crystal composition, such as light resistance, heat resistance, and oxidation resistance, while not significantly affecting the birefringence of the liquid crystal composition.

In some implementations of this application, the hindered amine additive may include a general formula represented by the following Formula (V):

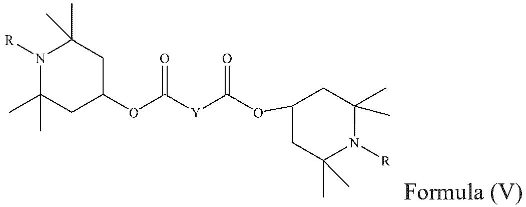

R in each occurrence is independently selected from a hydrogen atom, an oxygen atom, or C₁-C₄ alkyl; and Y is selected from linear alkylene having 3 to 10 carbon atoms. Specifically, in R, C₁-C₄ alkyl may be methyl, ethyl, propyl, butyl, or the like. Y may be represented as -(CH₂)ₙ-, and n is an integer ranging from 3 to 10, for example, specifically 4, 5, 6, 7, 8, or 9.

For example, the hindered amine additive may be selected from one or more of the following substances:

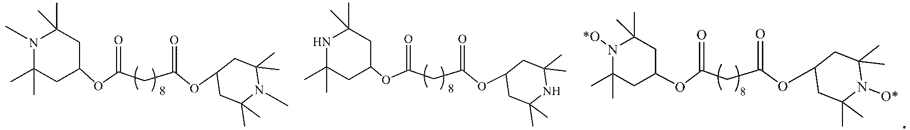

O* may alternatively be referred to as "oxygen free radical".

In some implementations of this application, the benzotriazole additive includes a general formula represented by the following Formula (VI-A) and/or a general formula represented by the following Formula (VI-B):

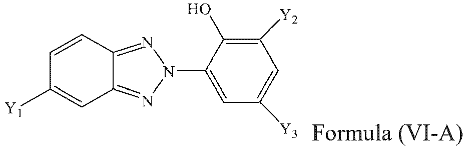

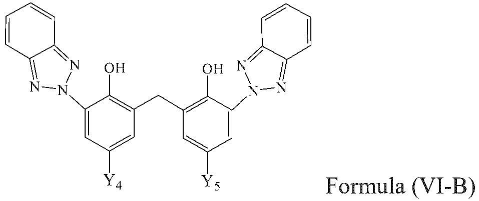

Y₁ is selected from a hydrogen atom or a halogen atom, Y₂ is independently selected from a hydrogen atom, and C₁-C₂₀ alkyl unsubstituted or substituted with a halogen atom, and Y₃, Y₄, and Y₅ are each independently selected from C₁-C₂₀ alkyl unsubstituted or substituted with one or more of a halogen atom and an ester group. The substituted or unsubstituted alkyl herein may be chain alkyl, for example, linear alkyl or branched alkyl. The ester group may be represented as -COOR', where R' may be alkyl.

In some embodiments, Y₁ is a fluorine atom or a chlorine atom. Y₂ is branched alkyl, for example, isopropyl or tert-butyl (that is, -C(CH₃)₃, t-Bu for short). Y₃ is substituted or unsubstituted linear alkyl or branched alkyl, for example, specifically methyl, ethyl, tert-butyl, - C(CH₃)₂-CH₂-C(CH₃)₃, -CH₂CH₂-COOC₇H₁₅, and -CH₂CH₂-COOC₉H₁₉. Y₄ and Y₅ may be independently methyl, ethyl, tert-butyl, -C(CH₃)₂-CH₂-C(CH₃)₃, and the like.

For example, the benzotriazole additive may be selected from one or more of the following substances:

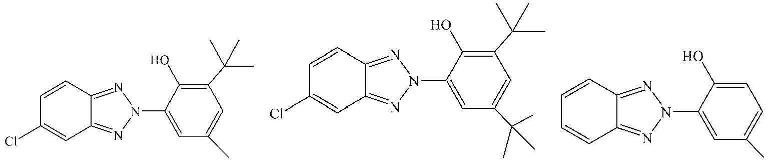

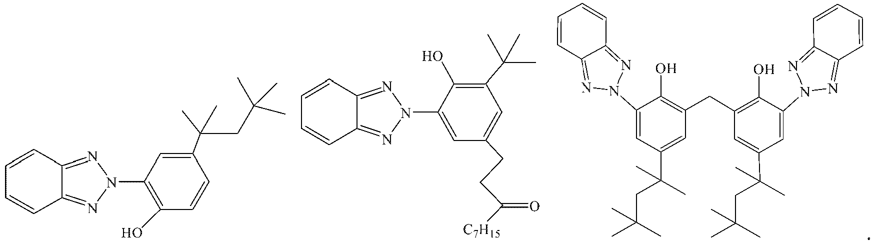

In an implementation of this application, the hindered phenol additive may have one or more of the following structures:

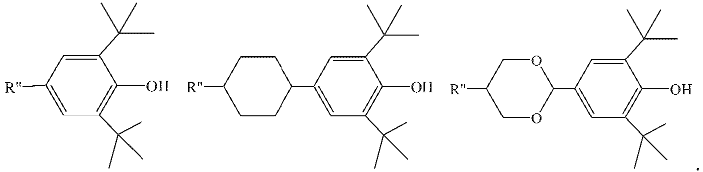

Each R" is independently selected from C₁-C₁₀ alkyl unsubstituted or substituted with one or more of a halogen atom and an ester group. The substituted or unsubstituted alkyl herein may be chain alkyl, for example, linear alkyl or branched alkyl.

In an implementation of this application, the birefringence of the liquid crystal composition may be greater than 0.32, for example, within a range of 0.32 to 0.42. High birefringence is conducive to use of the liquid crystal composition in fields of optical communications and wireless communications. Δn may be obtained by using a test method recognized in the industry. For example, Δn may specifically be 0.33, 0.34, 0.35, 0.36, 0.37, 0.38, 0.39, 0.40, 0.41, or the like.

In an implementation of this application, the clearing point of the liquid crystal composition is within a range of 100°C to 140°C. The term "clearing point" (English: clearing point) refers to a critical temperature at which a substance in a liquid crystal state is converted into a liquid state, that is, a maximum temperature at which the liquid crystal state may exist. The clearing point of the liquid crystal composition is within a proper range. This can ensure that a temperature of a subsequent heating process of the liquid crystal composition is not excessively high, and can also ensure that the liquid crystal composition stably maintains a liquid crystal state at a relatively high temperature, so that the liquid crystal device does not fail. Specifically, the clearing point of the liquid crystal composition may specifically be 105°C, 110°C, 115°C, 120°C, 122°C, 125°C, 130°C, 133°C, 135°C, 138°C, or the like. The clearing point of the liquid crystal composition may be obtained from a curve obtained by measuring the liquid crystal composition by using a differential scanning calorimeter (Differential Scanning Calorimeter, DSC).

In an implementation of this application, the liquid crystal composition exhibits no abnormality after being stored at -20°C for 500 hours. The "abnormality" herein mainly means that after the liquid crystal composition is filled into a liquid crystal cell and stored at -20°C for 500 hours, no abnormalities such as colored patterns, blackening, and darkening occur in the cell. This reflects that a crystallization point or a solidification point of the liquid crystal composition is low, low-temperature stability is good, and the liquid crystal device prepared using the liquid crystal composition may be used in a low temperature environment. In some embodiments, the liquid crystal composition exhibits no abnormality after being stored at -30°C for 500 hours, and has better low-temperature resistance.

An embodiment of this application further provides use of the liquid crystal composition in the liquid crystal device. The liquid crystal composition is mainly used in the liquid crystal layer of the liquid crystal device. It may be understood that the liquid crystal device includes the liquid crystal layer. Generally, the liquid crystal device includes a first substrate having a first electrode layer, a second substrate having a second electrode layer, and the liquid crystal layer disposed between the first substrate and the second substrate.

In an implementation of this application, the liquid crystal device may be used in scenarios such as optical communications, wireless communications, microwave scanning antennas, varifocal lenses, gratings, lidars, beam tracking, self-driving, projection, flat-panel display, and holographic display. For example, the liquid crystal device may be used as one or more parts in an optical communication device, a wireless communication device, a microwave scanning antenna, a liquid crystal optical antenna, a liquid crystal optical waveguide, a wavelength selective switch, a varifocal lens device (for example, a liquid crystal lens or liquid crystal glasses), a liquid crystal prism, a grating, a lidar, a beam tracker, a projector, an optical projection system, a flat-panel display, a holographic display, an image acquisition device, or the like.

For example, the optical projection system may be an AR HUD (which is an abbreviation of Augmented Reality head-up display) system, and may be used in a vehicle-mounted display. The flat-panel display may be a TFT-LCD (Thin-Film Transistor-Liquid Crystal Display) device, and the TFT-LCD device may be used in a smartphone, a tablet computer, or a television. For example, the TFT-LCD device generally includes a TFT array substrate, a color filter (Color Filter, CF) substrate, and a liquid crystal layer disposed between the TFT array substrate and the color filter substrate. The TFT substrate is mainly responsible for transmitting an electrical signal. The CF substrate mainly provides color required for display. In addition, the holographic display may be a display using a holographic polymer dispersed liquid crystal (HPDLC), and the grating may be a grating using the HPDLC. The optical communication device and the lidar may use the wavelength selective switch.

In some implementations of this application, the liquid crystal device is specifically used in the wavelength selective switch (WSS). In this case, the liquid crystal device may be the LCoS device shown in FIG. 1, refer to the foregoing descriptions about FIG. 1 in this application. The WSS modulates a phase of the optical signal through the LCoS device, to change a transmission direction of the optical signal.

FIG. 2 is a diagram of a structure of a wavelength selective switch (WSS). In addition to the liquid crystal device 100, the wavelength selective switch 200 may also include at least one input port 201 and at least one output port 202. An optical signal may be input from at least one of the plurality of input ports 201, modulated by the liquid crystal device 100, and then output from at least one of the plurality of output ports 202. In this way, a transmission direction of the optical signal is changed, for example, switching, uploading, or downloading of the optical signal is completed. A quantity of the input ports 201 and a quantity of the output ports 202 may be equal or not be equal. This is not limited in this application. The input port 201 and the output port 202 may be formed by optical fibers, and the input/output port may form an input/output optical fiber array.

It should be understood that the diagram of the structure of the WSS shown in FIG. 2 is merely an example for description. The WSS may also include an optical path adjustment device well known in the art, such as a grating, a lens, a reflector, and a collimator. This is not limited in this application. For example, in some implementations, the grating may be disposed between the input port 201 and the liquid crystal device 100. The grating may be configured to demultiplex optical signals of different wavelengths in space. The lens may be configured to focus or collimate light. The reflector is configured to reflect light.

A phase modulation amount Φ of the liquid crystal device satisfies the following relational expression with birefringence Δn of the device and cell gap d of the liquid crystal device: $Φ = 2 π \times Δn \times d / λ$

It can be learned that when the cell gap d is fixed, a higher Δn of a liquid crystal material indicates a larger phase modulation amount of the device. In addition, when the phase modulation amount Φ is fixed, a higher Δn indicates a smaller cell gap d, whereas a smaller cell gap d may allow the liquid crystal device to have a weaker fringing field effect, a shorter response time, and the like. A higher Δn is also conducive to improving resolution of the device and the like. Therefore, when the WSS includes the liquid crystal device 100 using the liquid crystal composition in embodiments of this application, the WSS may support larger phase and dielectric modulations, and has a faster switching speed and higher resolution. In addition, because the liquid crystal composition in this embodiment has good stability, performance of the liquid crystal device using the liquid crystal composition is stable, and a voltage holding ratio of the liquid crystal device does not decrease significantly after the liquid crystal device is exposed to ultraviolet radiation or placed in a high-temperature environment for a period of time.

In addition, based on high birefringence of the liquid crystal composition in embodiments of this application, the liquid crystal device using the liquid crystal composition in embodiments of this application has good performance, and is further suitable for use in fields such as display and communication. For example, a varifocal lens device using the liquid crystal device in embodiments of this application may obtain a better zoom performance; a grating (such as a holographic grating) using the liquid crystal device in embodiments of this application may have a wider angle of view; a holographic display, a projector, and the like using the liquid crystal device in embodiments of this application may have a greater depth of field; and a TFT-LCD device using the liquid crystal composition in embodiments of this application may have high resolution, a short response time, and the like.

An embodiment of this application further provides an apparatus. The apparatus includes the liquid crystal device in embodiments of this application. The apparatus may be one or more of a wavelength selective switch, a microwave scanning antenna, a liquid crystal optical antenna, a liquid crystal optical waveguide, a varifocal lens device, a liquid crystal prism, a grating, a lidar, a beam tracker, a projector, an optical projection system, a flat-panel display, a holographic display, an image acquisition device, an optical communication device, and a wireless communication device. The apparatus using the liquid crystal device in embodiments of this application has good performance and can run stably.

Embodiments of this application are further described below by using a plurality of embodiments.

Before specific embodiments of this application are described, structures and short names of some substances used in this application below are first described.
3PTP1: 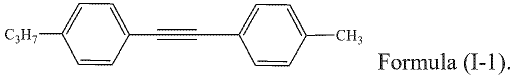
3PTPO(2): 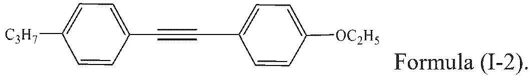
3UTGTP5: 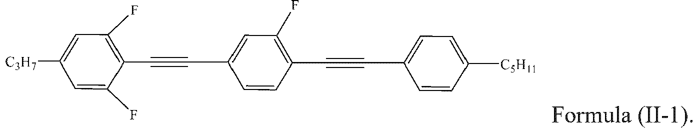
3PTGTP5: 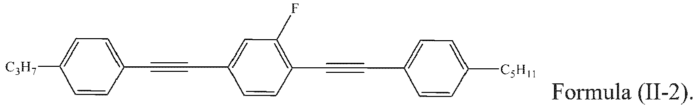
4PTGTP3: 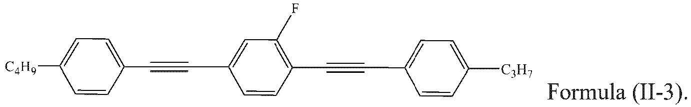
4PTGfTP3: 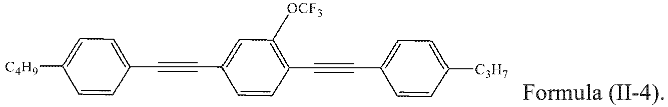
4PTP(1)TP2: 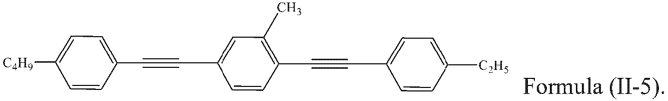
5PTP(1)TP2: 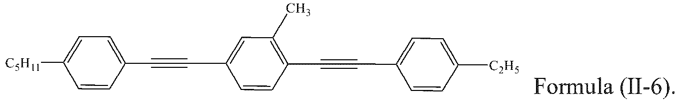
4PTGTP5: 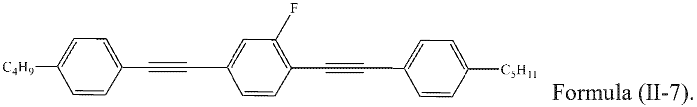
3PPTUI2: 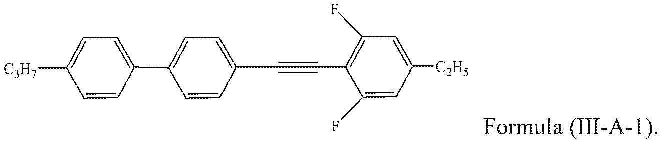
3PPTUI4: 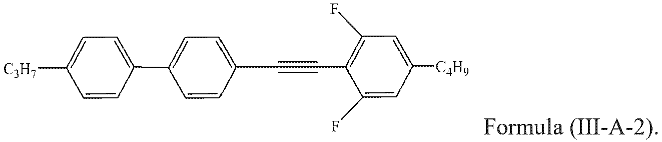
2PPTUI3: 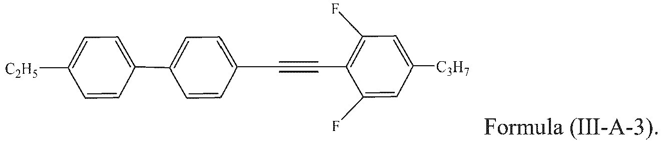
5GPTUF: 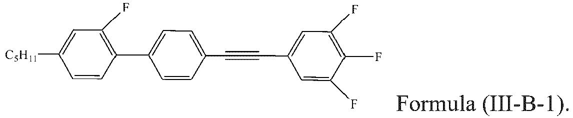
3GPTUF: 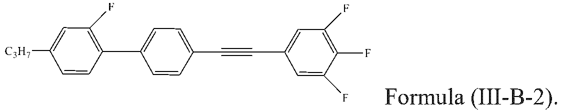
3GPTGF: 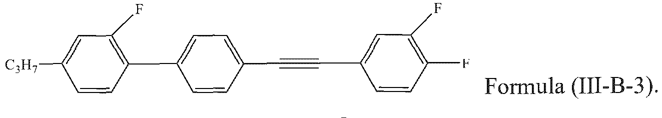
3PPTUF: 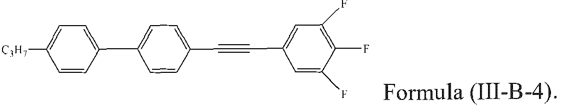
3PPTGF: 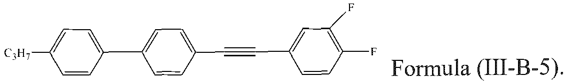
2PTGGF: 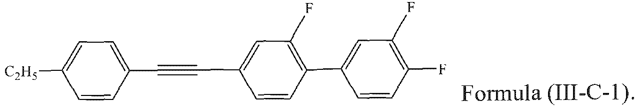
3PTGGF: 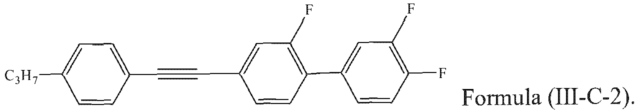
3PTGUF: 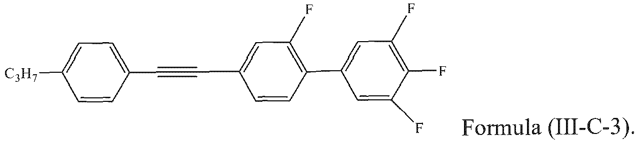
3CPO(2): 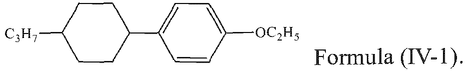
3PTPTP2: 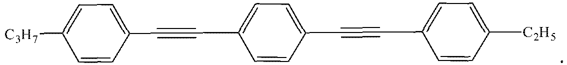
5PTPTP2: 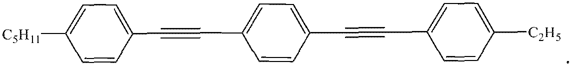
Additive 1: 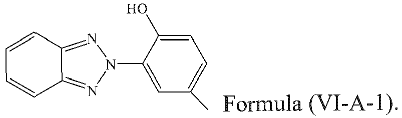
Additive 2: 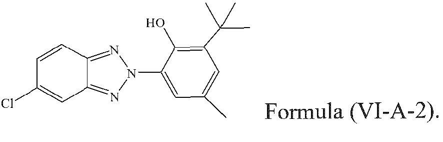
Additive 3: 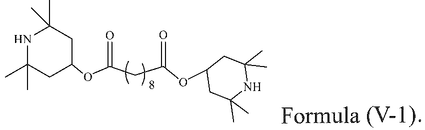
Additive 4: 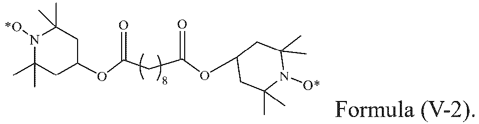
Additive 5: 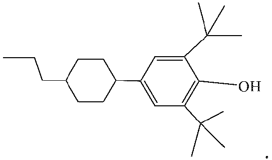
Additive 6:

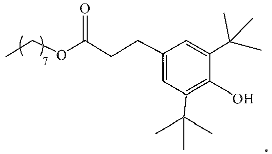

### Embodiment 1

A liquid crystal composition includes 100 parts by weight of liquid crystal components and 1 part by weight of additives (0.5 parts by weight of the additive 1 represented by Formula (VI-A-1) and 0.5 parts by weight of the additive 3 represented by Formula (V-1)). The liquid crystal components include the following compounds in percentage by mass:
a compound represented by Formula (I-1) (3PTP1 for short): 5 wt%;
a compound represented by Formula (I-2) (3PTPO(2) for short): 3 wt%;
a compound represented by Formula (II-1) (3UTGTP5 for short): 8 wt%;
a compound represented by Formula (II-2) (3PTGTP5 for short): 8 wt%;
a compound represented by Formula (II-3) (4PTGTP3 for short): 8 wt%;
a compound represented by Formula (III-A-1) (3PPTUI2 for short): 10 wt%;
a compound represented by Formula (III-A-2) (3PPTUI4 for short): 10 wt%;
a compound represented by Formula (III-A-3) (2PPTUI3 for short): 10 wt%;
a compound represented by Formula (III-B-1) (5GPTUF for short): 9 wt%;
a compound represented by Formula (III-B-2) (3GPTUF for short): 8 wt%;
a compound represented by Formula (III-B-3) (3GPTGF for short): 9 wt%;
a compound represented by Formula (III-C-1) (2PTGGF for short): 9 wt%;
a compound represented by Formula (IV-1) (3CPO(2) for short): 3 wt%.

### Embodiment 2

A liquid crystal composition includes 100 parts by weight of liquid crystal components and 1 part by weight of additives (composition thereof is the same as that in Embodiment 1). The liquid crystal components include the following compounds in percentage by mass:
a compound represented by Formula (I-1) (3PTP1 for short): 6 wt%;
a compound represented by Formula (I-2) (3PTPO(2) for short): 5 wt%;
a compound represented by Formula (II-1) (3UTGTP5 for short): 12 wt%;
a compound represented by Formula (II-2) (3PTGTP5 for short): 8 wt%;
a compound represented by Formula (II-3) (4PTGTP3 for short): 8 wt%;
a compound represented by Formula (III-A-2) (3PPTUI4 for short): 10 wt%;
a compound represented by Formula (III-A-3) (2PPTUI3 for short): 10 wt%;
a compound represented by Formula (III-B-1) (5GPTUF for short): 5 wt%;
a compound represented by Formula (III-B-2) (3GPTUF for short): 10 wt%;
a compound represented by Formula (III-B-3) (3GPTGF for short): 13 wt%;
a compound represented by Formula (III-C-1) (2PTGGF for short): 8 wt%;
a compound represented by Formula (IV-1) (3CPO(2) for short): 5 wt%.

### Embodiment 3

A liquid crystal composition includes 100 parts by weight of liquid crystal components and 1 part by weight of additives (composition thereof is the same as that in Embodiment 1). The liquid crystal components include the following compounds in percentage by mass:
a compound represented by Formula (I-2) (3PTPO(2) for short): 11 wt%;
a compound represented by Formula (II-2) (3PTGTP5 for short): 10 wt%;
a compound represented by Formula (II-3) (4PTGTP3 for short): 10 wt%;
a compound represented by Formula (II-4) (4PTGfTP3 for short): 7 wt%;
a compound represented by Formula (III-A-1) (3PPTUI2 for short): 16 wt%;
a compound represented by Formula (III-B-2) (3GPTUF for short): 16 wt%;
a compound represented by Formula (III-B-3) (3GPTGF for short): 15 wt%;
a compound represented by Formula (III-C-1) (2PTGGF for short): 15 wt%.

### Embodiment 4

A liquid crystal composition includes 100 parts by weight of liquid crystal components and 1 part by weight of additives (composition thereof is the same as that in Embodiment 1). The liquid crystal components include the following compounds in percentage by mass:
a compound represented by Formula (I-2) (3PTPO(2) for short): 11 wt%;
a compound represented by Formula (II-4) (4PTGfTP3 for short): 7 wt%;
a compound represented by Formula (II-5) (4PTP(1)TP2 for short): 10 wt%;
a compound represented by Formula (II-6) (5PTP(1)TP2 for short): 10 wt%;
a compound represented by Formula (III-A-1) (3PPTUI2 for short): 16 wt%;
a compound represented by Formula (III-C-1) (2PTGGF for short): 15 wt%;
a compound represented by Formula (III-C-2) (3PTGGF for short): 15 wt%;
a compound represented by Formula (III-C-3) (3PTGUF for short): 16 wt%.

### Embodiment 5

A liquid crystal composition includes 100 parts by weight of liquid crystal components and 1 part by weight of additives (composition thereof is the same as that in Embodiment 1). The liquid crystal components include the following compounds in percentage by mass:
a compound represented by Formula (I-2) (3PTPO(2) for short): 10 wt%;
a compound represented by Formula (II-4) (4PTGfTP3 for short): 8 wt%;
a compound represented by Formula (II-5) (4PTP(1)TP2 for short): 8 wt%;
a compound represented by Formula (II-6) (5PTP(1)TP2 for short): 8 wt%;
a compound represented by Formula (II-3) (4PTGTP3 for short): 5 wt%;
a compound represented by Formula (II-7) (4PTGTP5 for short): 5 wt%;
a compound represented by Formula (III-A-1) (3PPTUI2 for short): 10 wt%;
a compound represented by Formula (III-A-2) (3PPTUI4 for short): 5 wt%;
a compound represented by Formula (III-B-1) (5GPTUF for short): 6 wt%;
a compound represented by Formula (III-B-2) (3GPTUF for short): 8 wt%;
a compound represented by Formula (III-B-3) (3GPTGF for short): 12 wt%;
a compound represented by Formula (III-C-1) (2PTGGF for short): 4 wt%;
a compound represented by Formula (III-C-2) (3PTGGF for short): 3 wt%;
a compound represented by Formula (III-C-3) (3PTGUF for short): 8 wt%.

### Embodiment 6

A liquid crystal composition includes 100 parts by weight of liquid crystal components and 1 part by weight of additives (composition thereof is the same as that in Embodiment 1). The liquid crystal components include the following compounds in percentage by mass:
a compound represented by Formula (I-1) (3PTP1 for short): 5 wt%;
a compound represented by Formula (I-2) (3PTPO(2) for short): 3 wt%;
a compound represented by Formula (II-1) (3UTGTP5 for short): 2 wt%;
a compound represented by Formula (II-2) (3PTGTP5 for short): 8 wt%;
a compound represented by Formula (II-3) (4PTGTP3 for short): 8 wt%;
a compound represented by Formula (II-4) (4PTGfTP3 for short): 3 wt%;
a compound represented by Formula (II-5) (4PTP(1)TP2 for short): 4 wt%;
a compound represented by Formula (II-6) (5PTP(1)TP2 for short): 4 wt%;
a compound represented by Formula (III-A-1) (3PPTUI2 for short): 10 wt%;
a compound represented by Formula (III-A-2) (3PPTUI4 for short): 5 wt%;
a compound represented by Formula (III-A-3) (2PPTUI3 for short): 10 wt%;
a compound represented by Formula (III-B-1) (5GPTUF for short): 9 wt%;
a compound represented by Formula (III-B-2) (3GPTUF for short): 8 wt%;
a compound represented by Formula (III-B-3) (3GPTGF for short): 9 wt%;
a compound represented by Formula (III-C-1) (2PTGGF for short): 9 wt%;
a compound represented by Formula (IV-1) (3CPO(2) for short): 3 wt%.

### Embodiment 7

A liquid crystal composition includes 100 parts by weight of liquid crystal components and 1 part by weight of additives (composition thereof is the same as that in Embodiment 1). The liquid crystal components include the following compounds in percentage by mass:
a compound represented by Formula (I-2) (3PTPO(2) for short): 11 wt%;
a compound represented by Formula (II-3) (4PTGTP3 for short): 10 wt%;
a compound represented by Formula (II-4) (4PTGfTP3 for short): 7 wt%;
a compound represented by Formula (II-8) (4PTGP5 for short): 10 wt%;
a compound represented by Formula (III-A-1) (3PPTUI2 for short): 16 wt%;
a compound represented by Formula (III-B-4) (3PPTUF for short): 16 wt%;
a compound represented by Formula (III-B-5) (3PPTGF for short): 15 wt%;
a compound represented by Formula (III-C-1) (2PTGGF for short): 15 wt%.

After each liquid crystal composition is stored at -30°C for 500 hours (approximately 20.8 days), no abnormalities such as colored patterns, blackening, and darkening occur, and no crystallization occurs. This indicates that a crystallization point of each liquid crystal composition is lower than -30°C. In addition, even if each liquid crystal composition does not contain the additive, the crystallization point of each liquid crystal composition is lower than -30°C.

A differential scanning calorimeter (DSC) was used to perform calorimetric measurements on each liquid crystal composition to obtain a DSC curve, from which a clearing point (Cp) in °C was read. An ATAGO-DR-M4 Abbe refractometer was used to measure an ordinary refractive index (nₒ) and an extraordinary refractive index (nₑ) of each liquid crystal composition at 25°C under 589 nm light. A difference between the ordinary refractive index and the extraordinary refractive index is birefringence Δn. Test results of the clearing point and the birefringence Δn are summarized in the following Table 1.

**Table 1**

| | Clearing point (°C) | Δn |
|---|---|---|
| Embodiment 1 | 132.6 | 0.343 |
| Embodiment 2 | 131.1 | 0.354 |
| Embodiment 3 | 126.0 | 0.351 |
| Embodiment 4 | 128.1 | 0.353 |
| Embodiment 5 | 129.2 | 0.358 |
| Embodiment 6 | 127.9 | 0.350 |
| Embodiment 7 | 128.3 | 0.352 |

It can be learned from Table 1 that, the birefringence Δn of each liquid crystal composition provided in embodiments of this application is high, and Δn is greater than 0.33; and the clearing point of each liquid crystal composition is suitable, and is within a range of 120°C to 140°C, to facilitate subsequent use of the liquid crystal composition.

The liquid crystal composition in Embodiment 1 is used as an example to test high-temperature stability and anti-ultraviolet (UV) performance of the liquid crystal composition, and is compared with an additive-free liquid crystal composition (denoted as Comparative example 1) under the same conditions.

High-temperature stability test: Fill each liquid crystal composition into a TN liquid crystal cell with a cell gap of 7 µm, seal the cell with a sealant and cure the cell, test a voltage holding ratio (VHR₀) of the prepared liquid crystal cell sample, place the liquid crystal cell sample in a temperature-controllable oven set at 100°C, test VHR after the liquid crystal cell sample is placed at 100°C for different durations, and then calculate a variation of the voltage holding ratio (that is, ΔVHR, which is equal to VHR₀-VHR).

Anti-UV performance test: Fill each liquid crystal composition into a TN liquid crystal cell with a cell gap of 7 µm, seal the cell with a sealant and cure the cell, place the prepared liquid crystal cell sample in an ultraviolet test chamber, and test a variation of a voltage holding ratio (ΔVHR) and color change degree of each liquid crystal cell sample after ultraviolet lamp irradiation at a certain cumulative irradiation dose.

The foregoing VHRs are tested by using an ALCT-IV1 liquid crystal comprehensive parameter tester. Test conditions: Temperature: 25°C; Voltage: 5 V; Driving frequency: 60 Hz.

The color change degree may be measured by using a color coordinate offset value ΔE and a variation ΔYI of a yellowness index (YI). ΔE=[(ΔL)²+(Δa)²+(Δb)²]^{1/2}, where ΔL, Δa, and Δb respectively represent variations of L, a, and b values of the liquid crystal cell test sample in Lab chromaticity coordinates before and after UV irradiation. A larger ΔE value indicates a larger color difference, and a smaller ΔE value indicates a smaller color difference.

**Table 2 High-temperature stability test results**

| Sample | | VHR test (%) (25°C, 60 Hz) | | | | |
|---|---|---|---|---|---|---|
| | | 0 h | 24 h | 48 h | 120 h | 240 h |
| Comparative example 1 | VHR (Aver) | 97.02 | 94.12 | 93.43 | 92.80 | 90.12 |
| | ΔVHR | 0.00 | 2.90 | 3.59 | 4.22 | 6.90 |
| Embodiment 1 | VHR (Aver) | 97.34 | 97.07 | 97.34 | 97.03 | 95.18 |

| Sample | | VHR test (%) (25°C, 60 Hz) | | | | |
|---|---|---|---|---|---|---|
| | | 0 h | 24 h | 48 h | 120 h | 240 h |
| | ΔVHR | 0.00 | 0.27 | 0.00 | 0.31 | 2.12 |

**Table 3 Anti-UV performance test results**

| Sample | | L | a | b | YI | ΔE | ΔYI |
|---|---|---|---|---|---|---|---|
| Comparative example 1 | 0 J | 95.88 | -0.66 | 0.68 | 0.79 | 13.32 | 19.45 |
| | 40 J | 95.39 | -4.83 | 13.32 | 20.24 | | |
| Embodiment 1 | 0 J | 95.85 | -0.78 | 1.07 | 1.44 | 8.29 | 12.06 |
| | 40 J | 95.32 | -3.62 | 8.84 | 13.50 | | |

It can be learned from Table 2 and Table 3 that, the liquid crystal composition including the additive in Embodiment 1 of this application has good high-temperature resistance and anti-ultraviolet performance, ΔVHR is still lower than 2.2% after the liquid crystal cell filled with the liquid crystal composition is placed at a high temperature of 100°C for 240 hours, and the color change degree of the liquid crystal cell prepared from the liquid crystal composition is low after irradiation by ultraviolet light at a cumulative dose of 40 J. This indicates that addition of the additive can improve the high-temperature resistance and UV-induced yellowing condition of the liquid crystal composition, and ensure that practical use effect of a liquid crystal device is good and stable.

### Embodiment 8

A liquid crystal composition includes 100 parts by weight of liquid crystal components and 1 part by weight of the additive 3 represented by Formula (V-1). The liquid crystal components include the following compounds in percentage by mass:
a compound represented by Formula (I-2) (3PTPO(2) for short): 10 wt%;
a compound represented by Formula (II-4) (4PTGfTP3 for short): 8 wt%;
a compound represented by Formula (II-5) (4PTP(1)TP2 for short): 8 wt%;
a compound represented by Formula (II-6) (5PTP(1)TP2 for short): 8 wt%;
a compound represented by Formula (II-3) (4PTGTP3 for short): 5 wt%;
a compound represented by Formula (II-7) (4PTGTP5 for short): 5 wt%;
a compound represented by Formula (III-A-1) (3PPTUI2 for short): 10 wt%;
a compound represented by Formula (III-A-2) (3PPTUI4 for short): 5 wt%;
a compound represented by Formula (III-B-1) (5GPTUF for short): 6 wt%;
a compound represented by Formula (III-B-2) (3GPTUF for short): 8 wt%;
a compound represented by Formula (III-B-3) (3GPTGF for short): 12 wt%;
a compound represented by Formula (III-C-1) (2PTGGF for short): 4 wt%;
a compound represented by Formula (III-C-2) (3PTGGF for short): 3 wt%;
a compound represented by Formula (III-C-3) (3PTGUF for short): 8 wt%.

### Embodiment 9

A liquid crystal composition includes 100 parts by weight of liquid crystal components (formulation thereof is the same as that in Embodiment 8) and 1 part by weight of the additive 1 represented by Formula (VI-A-1).

### Embodiment 10

A liquid crystal composition includes 100 parts by weight of liquid crystal components (formulation thereof is the same as that in Embodiment 8), 1 part by weight of the additive 2 represented by Formula (VI-A-2), and 1 part by weight of the additive 5.

### Embodiment 11

A liquid crystal composition includes 100 parts by weight of liquid crystal components (formulation thereof is the same as that in Embodiment 8), 0.5 parts by weight of the additive 2 represented by Formula (VI-A-2), 0.5 parts by weight of the additive 5, and 0.5 parts by weight of the additive 3 represented by Formula (V-1).

### Comparative example 2

A liquid crystal composition is different from Embodiment 8 only in that no additive is contained therein.

High-temperature stability of liquid crystal cell samples filled with the liquid crystal compositions of Embodiments 8 to 11 and Comparative example 2 was tested, and results are summarized in Table 4.

**Table 4**

| Sample | | VHR test (%) (25°C, 60 Hz) | | | | |
|---|---|---|---|---|---|---|
| | | 0 h | 24 h | 48 h | 72 h | 96 h |
| Comparative example 2 | VHR (Aver) | 95.92 | 94.59 | 92.29 | 92.80 | 93.11 |
| | ΔVHR | 0.00 | 1.33 | 3.63 | 3.12 | 2.81 |
| Embodiment 8 | VHR (Aver) | 97.02 | 97.62 | 96.95 | 96.73 | 96.37 |
| | ΔVHR | 0.00 | -0.60 | 0.07 | 0.29 | 0.65 |
| Embodiment 9 | VHR (Aver) | 94.01 | 93.21 | 91.28 | 93.35 | 94.06 |
| | ΔVHR | 0.00 | 0.80 | 2.73 | 0.66 | -0.05 |
| Embodiment 10 | VHR (Aver) | 98.45 | 98.41 | 97.82 | 97.68 | 97.25 |
| | ΔVHR | 0.00 | 0.04 | 0.63 | 0.77 | 1.20 |
| Embodiment 11 | VHR (Aver) | 98.38 | 99.12 | 99.13 | 99.06 | 98.40 |
| | ΔVHR | 0.00 | -0.73 | -0.74 | -0.67 | -0.02 |

It can be learned from Table 4 that, for liquid crystal compositions having same liquid crystal component composition, a type selection and an amount of additives have different effects on the high-temperature stability of the liquid crystal composition. In general, the high-temperature stability of the liquid crystal compositions of Embodiments 8 to 11 containing additives is superior to that of Comparative example 2 not containing additives.

In addition, this application further provides liquid crystal compositions in the following Embodiments 12 to 18.

### Embodiment 12

A liquid crystal composition is different from Embodiment 11 only in that, in the liquid crystal composition, a content of the additive 2 is 1 part by weight, and contents of the additives 3 and 5 are unchanged.

### Embodiment 13

A liquid crystal composition is different from Embodiment 11 only in that, in the liquid crystal composition, a content of the additive 5 is 1 part by weight, and contents of the additives 2 and 3 are unchanged.

### Embodiment 14

A liquid crystal composition is different from Embodiment 11 only in that, in the liquid crystal composition, a content of the additive 3 is 1 part by weight, and contents of the additives 2 and 5 are unchanged.

### Embodiment 15

A liquid crystal composition includes 100 parts by weight of liquid crystal components (formulation thereof is the same as that in Embodiment 8) and 1 part by weight of the additive 6.

### Embodiment 16

A liquid crystal composition includes 100 parts by weight of liquid crystal components (formulation thereof is the same as that in Embodiment 8) and 1 part by weight of the additive 4.

### Embodiment 17

A liquid crystal composition includes 100 parts by weight of liquid crystal components (formulation thereof is the same as that in Embodiment 8), 0.5 parts by weight of the additive 2, 0.5 parts by weight of the additive 6, and 0.5 parts by weight of the additive 3.

### Embodiment 18

A liquid crystal composition includes 100 parts by weight of liquid crystal components (formulation thereof is the same as that in Embodiment 8), 0.5 parts by weight of the additive 2, 0.5 parts by weight of the additive 6, and 0.5 parts by weight of the additive 4.

It is found through testing that, after liquid crystal cell samples filled with the liquid crystal compositions of Embodiments 12 to 18 are placed at 100°C for 96 hours, ΔVHR is lower than 1.5%. In addition, birefringence Δn of the liquid crystal compositions of Embodiments 12 to 18 is in a range of 0.34 to 0.36.

In addition, to highlight beneficial effects of embodiments of this application, this application further provides the following Comparative examples 3 to 4.

### Comparative example 3

A liquid crystal composition includes 100 parts by weight of liquid crystal components and 1 part by weight of additives (the same as Embodiment 1). The liquid crystal components include the following compounds in percentage by mass:
a compound represented by Formula (I-1) (3PTP1 for short): 12 wt%;
a compound represented by Formula (I-2) (3PTPO(2) for short): 15 wt%;
a compound represented by Formula (III-A-1) (3PPTUI2 for short): 10 wt%;
a compound represented by Formula (III-A-2) (3PPTUI4 for short): 6 wt%;
a compound represented by Formula (III-B-1) (5GPTUF for short): 8 wt%;
a compound represented by Formula (III-B-2) (3GPTUF for short): 9 wt%;
a compound represented by Formula (III-B-3) (3GPTGF for short): 8 wt%;
a compound represented by Formula (III-C-1) (2PTGGF for short): 12 wt%;
a compound represented by Formula (III-C-2) (3PTGGF for short): 10 wt%;
a compound represented by Formula (III-C-3) (3PTGUF for short): 10 wt%.

A main difference between composition of liquid crystal components of Comparative example 3 and that of the foregoing Embodiment 5 is that the composition of the liquid crystal components does not contain the compound represented by Formula (II), and contains the compound represented by Formula (I-1).

### Comparative example 4

A liquid crystal composition includes 100 parts by weight of liquid crystal components and 1 part by weight of additives (the same as Embodiment 1). The liquid crystal components include the following compounds in percentage by mass:
a compound represented by Formula (I-2) (3PTPO(2) for short): 12 wt%;
a liquid crystal compound 3PTPTP2: 12 wt%;
a liquid crystal compound 5PTPTP2: 13 wt%;
a compound represented by Formula (III-A-1) (3PPTUI2 for short): 16 wt%;
a compound represented by Formula (III-C-1) (2PTGGF for short): 16 wt%;
a compound represented by Formula (III-C-2) (3PTGGF for short): 15 wt%;
a compound represented by Formula (III-C-3) (3PTGUF for short): 16 wt%.

A main difference between composition of liquid crystal components of Comparative example 4 and that of the foregoing Embodiment 4 is that the composition of the liquid crystal components does not contain the compound represented by Formula (II) of this application, and contains the compounds 3PTPTP2 and 5PTPTP2 that do not conform to Formula (II) of this application.

It is found that, birefringence Δn of the liquid crystal composition of Comparative example 3 is 0.313, which is lower than a high level greater than 0.32 achieved by the liquid crystal composition in embodiments of this application. The liquid crystal composition of Comparative example 4 was filled into a liquid crystal cell and stored at a low temperature of -20°C for 500 hours; colored patterns were observed in the cell. This indicates that low-temperature resistance of the liquid crystal composition of Comparative example 4 is poor. This may also reflect that the liquid crystal composition containing the compound represented by Formula (I), the compound represented by Formula (II), and the compound represented by Formula (III) in this application may have high birefringence and good low-temperature resistance.

The foregoing descriptions are merely example implementations of this application, and descriptions thereof are specific and detailed, but cannot be construed as a limitation on the patent scope of this application. It should be noted that a person of ordinary skill in the art may make some variants and improvements without departing from the concept of this application, and the variants and improvements shall fall within the protection scope of this application. Therefore, the protection scope of the patent in this application shall be subject to the appended claims.

It should be noted that, the terms "first", "second", and the like used in this application are used to distinguish between different objects, and are not used to describe a particular order. Terms "setting", "connection", and "installation" in this application should be understood in a broad sense, for example, may be a direct setting, connection, or installation, or may be an indirect setting, connection, or installation through an intermediate medium. Directional terms such as "up", "down", "front", "back", "left", "right", "inside", "outside", "positive", "back", "bottom", "top", and the like mentioned in this application, are merely intended to describe and understand this application better and more clearly, and are not intended to indicate or imply that a specified part need to have a specific orientation and be constructed and operated in the specific orientation. Therefore, such terms need not be construed as a limitation on this application.

In the descriptions of this application, unless otherwise specified, "a plurality of (types)" means two or more (types). "At least one (type)" means one (type) or more (types). "At least one of the following items (pieces)" or a similar expression thereof indicates any combination of these items, including a single item (piece) or any combination of a plurality of items (pieces). For example, "at least one of a, b, or c", or "at least one of a, b, and c" may indicate: a, b, c, a-b (namely, a and b), a-c, b-c, or a-b-c, where a, b, and c may be singular or plural.

In addition, the value range represented by "-" in this application is a range included by using values recorded before and after "-" as a minimum value and a maximum value respectively. Expressions of a parameter range in this application, for example, "greater than or equal to (≥)", "less than or equal to (≤)", "above...", and "below...", all include a specified number.

## Claims

1. A liquid crystal composition, wherein the liquid crystal composition comprises at least one first compound represented by Formula (I), at least one second compound represented by Formula (II), at least one third compound represented by Formula (III), and an additive: 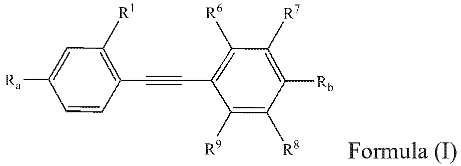 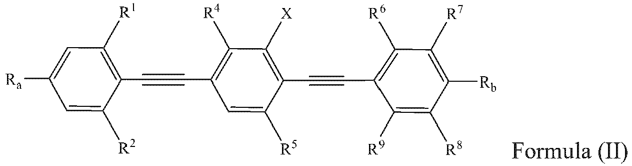 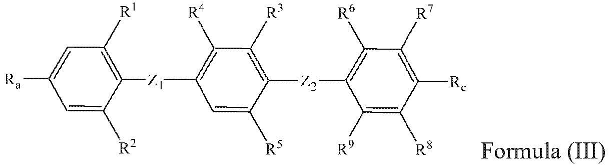
wherein Rₐ and R_{b} in each occurrence are each independently selected from one of substituted or unsubstituted alkyl, substituted or unsubstituted alkoxy, substituted or unsubstituted alkenyl, substituted or unsubstituted alkenyloxy, substituted or unsubstituted alkynyl, substituted or unsubstituted alkynyloxy, or substituted or unsubstituted cycloalkyl; and R_{c} is selected from one of a halogen atom, substituted or unsubstituted alkyl, substituted or unsubstituted alkoxy, substituted or unsubstituted alkenyl, substituted or unsubstituted alkenyloxy, substituted or unsubstituted alkynyl, substituted or unsubstituted alkynyloxy, or substituted or unsubstituted cycloalkyl;
Z₁ and Z₂ are each independently selected from -CH=CH-, -CF=CF-, -CH=CF-, -CF=CH-, - CH₂-CH₂-, -CF₂-CF₂-, -CF₂-CH₂-, -CH₂-CF₂-, -CH₂-O-, -O-CH₂-, -CF₂O-, -OCF₂-, -CO-O-, -O-CO-, -N=N-, -CH=N-, -N=CH-, -C=C-, -C≡C-C≡C-, or a direct bond, and are not both -C=C- or direct bonds; and
R¹, R², R³, R⁴, R⁵, R⁶, R⁷, R⁸ and R⁹ in each occurrence are each independently selected from one of a hydrogen atom, a deuterium atom, a tritium atom, a halogen atom, substituted or unsubstituted alkyl, substituted or unsubstituted alkoxy, or unsubstituted cycloalkyl, wherein in Formula (I), Formula (II), and Formula (III), at least one of R⁸ and R⁹ is a hydrogen atom; and X is selected from one of a halogen atom, substituted or unsubstituted alkyl, or substituted or unsubstituted alkoxy.

2. The liquid crystal composition according to claim 1, wherein in Formula (III), Z₁ is -C=C-, and Z₂ is a direct bond; or Z₁ is a direct bond, and Z₂ is -C≡C-.

3. The liquid crystal composition according to claim 1 or 2, wherein substituents of the substituted alkyl, substituted alkoxy, substituted alkenyl, substituted alkenyloxy, substituted alkynyl, and substituted alkynyloxy each comprise one or more of a deuterium atom, a tritium atom, and a halogen atom; and substituents of the substituted cycloalkyl comprise one or more of a halogen atom, substituted or unsubstituted alkyl, substituted or unsubstituted alkoxy, substituted or unsubstituted alkenyl, substituted or unsubstituted alkenyloxy, substituted or unsubstituted alkynyl, substituted or unsubstituted alkynyloxy, and substituted or unsubstituted cycloalkyl.

4. The liquid crystal composition according to any one of claims 1 to 3, wherein the substituted or unsubstituted alkyl is substituted or unsubstituted C₁-C₂₀ alkyl; the substituted or unsubstituted alkoxy is substituted or unsubstituted C₁-C₂₀ alkoxy; the substituted or unsubstituted alkenyl is substituted or unsubstituted C₂-C₂₀ alkenyl; the substituted or unsubstituted alkenyloxy is substituted or unsubstituted C₂-C₂₀ alkenyloxy; the substituted or unsubstituted alkynyl is substituted or unsubstituted C₂-C₂₀ alkynyl; the substituted or unsubstituted alkynyloxy is substituted or unsubstituted C₂-C₂₀ alkynyloxy; and the substituted or unsubstituted cycloalkyl is substituted or unsubstituted C₃-C₂₀ cycloalkyl.

5. The liquid crystal composition according to any one of claims 1 to 4, wherein in X, R¹, R², R³, R⁴, R⁸, R⁶, R⁷, R⁸ and R⁹, the substituted or unsubstituted alkyl is fluorinated or unsubstituted C₁-C₈ alkyl; the substituted or unsubstituted alkoxy is fluorinated or unsubstituted C₁-C₈ alkoxy; and the unsubstituted cycloalkyl is unsubstituted C₃-C₁₀ cycloalkyl.

6. The liquid crystal composition according to any one of claims 1 to 5, wherein in Formula (I), Formula (II), and Formula (III), at least one of R⁶ and R⁷ is a hydrogen atom; and in Formula (II) and Formula (III), at least one of R⁴ and R⁵ is a hydrogen atom.

7. The liquid crystal composition according to any one of claims 1 to 6, wherein in the liquid crystal composition, a content of the first compound is 1% to 70% in percentage by mass, a content of the second compound is 1% to 70% in percentage by mass, and a content of the third compound is 1% to 70% in percentage by mass.

8. The liquid crystal composition according to claim 7, wherein in the liquid crystal composition, the content of the first compound is 1% to 20% in percentage by mass, the content of the second compound is 15% to 50% in percentage by mass, and the content of the third compound is 40% to 65% in percentage by mass.

9. The liquid crystal composition according to any one of claims 1 to 8, wherein in Formula (I), R¹, R⁶, R⁷, R⁸, and R⁹ are all hydrogen atoms.

10. The liquid crystal composition according to any one of claims 1 to 9, wherein in Formula (II), R⁴, R⁸, R⁶, R⁷, R⁸ and R⁹ are all hydrogen atoms.

11. The liquid crystal composition according to any one of claims 1 to 10, wherein the at least one third compound comprises one or more of a substance represented by the following Formula (III-A), a substance represented by the following Formula (III-B), and a substance represented by the following Formula (III-C): 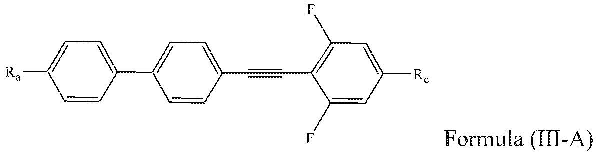 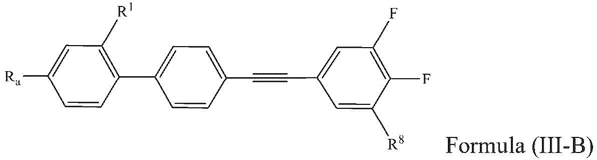 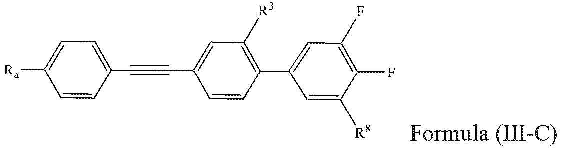 wherein R¹ and R³ in each occurrence are each independently selected from one of a hydrogen atom, a fluorine atom, fluorinated or unsubstituted alkyl, or fluorinated or unsubstituted alkoxy; R ⁸ in each occurrence is independently selected from one of a hydrogen atom or a fluorine atom; and R_{c} is selected from one of substituted or unsubstituted alkyl, substituted or unsubstituted alkoxy, or unsubstituted cycloalkyl.

12. The liquid crystal composition according to claim 11, wherein the at least one third compound comprises the substance represented by Formula (III-A), and one or more of the substance represented by Formula (III-B) and the substance represented by Formula (III-C).

13. The liquid crystal composition according to claim 11 or 12, wherein contents of the substance represented by Formula (III-A), the substance represented by Formula (III-B), and the substance represented by Formula (III-C) in the liquid crystal composition are each independently 50% or less in percentage by mass.

14. The liquid crystal composition according to any one of claims 11 to 13, wherein in the liquid crystal composition, the content of the substance represented by Formula (III-A) is within a range of 14% to 30% in percentage by mass, the content of the substance represented by Formula (III-B) is within a range of 0% to 32% in percentage by mass, and the content of the substance represented by Formula (III-C) is within a range of 8% to 46% in percentage by mass.

15. The liquid crystal composition according to any one of claims 1 to 14, wherein the liquid crystal composition further comprises a substance represented by the following Formula (IV): 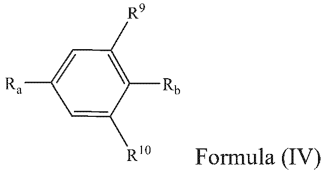 wherein R⁹ and R¹⁰ are each independently selected from one of a hydrogen atom, a deuterium atom, a tritium atom, a halogen atom, substituted or unsubstituted alkyl, or substituted or unsubstituted alkoxy.

16. The liquid crystal composition according to any one of claims 1 to 15, wherein the additive comprises one or more of a hindered phenol additive, a hindered amine additive, and a benzotriazole additive.

17. The liquid crystal composition according to any one of claims 1 to 16, wherein a content of the additive in the liquid crystal composition is 5% or less in percentage by mass.

18. The liquid crystal composition according to claim 16, wherein the hindered amine additive comprises a general formula represented by the following Formula (V): 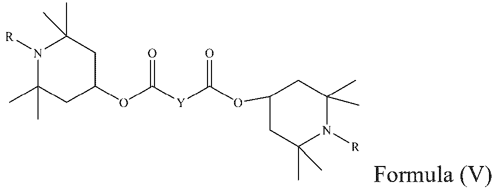 wherein R in each occurrence is independently selected from a hydrogen atom, an oxygen atom, or C₁-C₄ alkyl; and Y is selected from linear alkylene having 3 to 10 carbon atoms.

19. The liquid crystal composition according to claim 16, wherein the benzotriazole additive comprises one or more of a general formula represented by the following Formula (VI-A) and a general formula represented by the following Formula (VI-B): 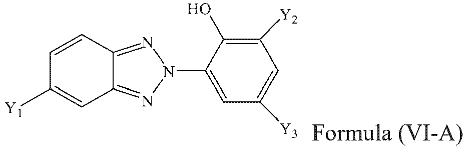 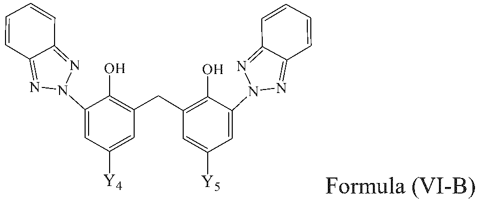 wherein Y₁ is selected from a hydrogen atom or a halogen atom, Y₂ is independently selected from a hydrogen atom, and C₁-C₂₀ alkyl unsubstituted or substituted with a halogen atom, and Y₃, Y₄, and Y₅ are each independently selected from C₁-C₂₀ alkyl unsubstituted or substituted with one or more of a halogen atom and an ester group.

20. The liquid crystal composition according to any one of claims 1 to 19, wherein birefringence of the liquid crystal composition is within a range of 0.32 to 0.42, a clearing point of the liquid crystal composition is within a range of 100°C to 140°C, and the liquid crystal composition exhibits no abnormality after being stored at -20°C for 500 hours.

21. Use of the liquid crystal composition according to any one of claims 1 to 20 in a liquid crystal device.

22. A liquid crystal device, wherein the liquid crystal device comprises a liquid crystal layer, and the liquid crystal layer comprises the liquid crystal composition according to any one of claims 1 to 20.

23. The liquid crystal device according to claim 22, wherein the liquid crystal device comprises a cover substrate, a transparent electrode layer, a first alignment layer, the liquid crystal layer, a second alignment layer, a passivation layer, a backplane electrode layer, and a silicon substrate that are sequentially stacked.

24. An apparatus, wherein the apparatus comprises the liquid crystal device according to claim 22.

25. The liquid crystal device according to claim 24, wherein the apparatus comprises one or more of a wavelength selective switch, a microwave scanning antenna, a liquid crystal optical antenna, a liquid crystal optical waveguide, a varifocal lens device, a liquid crystal prism, a grating, a lidar, a beam tracker, a projector, an optical projection system, a flat-panel display, a holographic display, an image acquisition device, an optical communication device, and a wireless communication device.
